(19)

Europäisches Patentamt
European Patent Office
Office européen des brevets

(11) **EP 3 162 842 B1**

(12) **EUROPEAN PATENT SPECIFICATION**

(45) Date of publication and mention of the grant of the patent:
**17.04.2019 Bulletin 2019/16**

(21) Application number: **15814990.6**

(22) Date of filing: **30.06.2015**

(51) Int Cl.:
*C08J 5/24* *(2006.01)*   *C08J 3/12* *(2006.01)*
*C08J 5/04* *(2006.01)*

(86) International application number:
**PCT/JP2015/068822**

(87) International publication number:
**WO 2016/002777 (07.01.2016 Gazette 2016/01)**

(54) **TOW PREPREG, COMPOSITE PRESSURE VESSEL, AND METHOD FOR MANUFACTURING SAME**

TOW-PREPREG, COMPOSITE-DRUCKBEHÄLTER UND VERFAHREN ZUR HERSTELLUNG DAVON

CÂBLE PRÉIMPRÉGNÉ, ET RÉCIPIENT COMPOSITE SOUS PRESSION ET LEUR PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2014 JP 2014133677**

(43) Date of publication of application:
**03.05.2017 Bulletin 2017/18**

(73) Proprietor: **Mitsubishi Chemical Corporation Tokyo 100-8251 (JP)**

(72) Inventors:
• **OKAMOTO, Satoshi**
**Toyohashi-shi**
**Aichi 440-8601 (JP)**
• **HARADA, Yukihiro**
**Toyohashi-shi**
**Aichi 440-8601 (JP)**

• **KONDO, Toru**
**Otake-shi**
**Hiroshima 739-0693 (JP)**

(74) Representative: **Hoffmann Eitle**
**Patent- und Rechtsanwälte PartmbB**
**Arabellastraße 30**
**81925 München (DE)**

(56) References cited:
| | |
|---|---|
| EP-A1- 2 857 428 | EP-A2- 0 578 613 |
| EP-A2- 0 742 266 | WO-A1-2010/090246 |
| WO-A1-2013/183667 | WO-A1-2014/050896 |
| JP-A- H0 776 658 | JP-A- H10 237 196 |
| JP-A- H11 181 245 | JP-A- 2002 020 457 |
| JP-A- 2003 049 050 | JP-A- 2011 157 491 |
| JP-A- 2012 056 980 | JP-A- 2015 004 020 |
| US-A1- 2010 280 151 | US-A1- 2012 164 455 |

**Description**

Technical Field

The present invention relates to a tow prepreg and pressure vessel formed using fiber-reinforced composite material and their manufacturing methods. In addition to being used for a pressure vessel, the tow prepreg may also be used for general industrial applications such as sporting goods, automobiles, aircraft and tendons.

Background Art

As storage tanks for compressed natural gas and hydrogen gas loaded on moving bodies such as automobiles, pressure vessels formed by reinforcing tank liners (hereinafter referred to as "liners") with fiber-reinforced composite material are used because of their lightweight features. Examples of reinforcing fibers used in fiber-reinforced composite material are glass fibers, carbon fibers and the like. Especially, carbon fibers have an advantage in the manufacture of lightweight pressure vessels due to their high specific strength. Thus, carbon fibers are preferably used in hydrogen gas storage tanks, which are required to have higher pressure resistance than storage tanks for compressed natural gas.
Generally, pressure vessels formed using fiber-reinforced composite material (hereinafter may also be referred to as "composite material pressure vessel") are manufactured by employing filament winding (FW) molding. FW molding is a method conducted by supplying a matrix resin composition to be impregnated into one or multiple unidirectionally aligned reinforcing fiber bundles, winding the impregnated reinforcing fiber bundles on a rotating mandrel for forming liners or the like at a predetermined tension and angle, and by curing the matrix resin composition. Most of such methods are conducted by supplying and impregnating a matrix resin composition to reinforcing fiber bundles (impregnation step), which is followed by winding the impregnated fiber bundles on a rotating mandrel for forming liners or the like (FW step).
Instead of supplying a matrix resin composition to impregnate reinforcing fiber bundles shortly before an FW step, it is also an option to use a tow prepreg produced in advance by impregnating reinforcing fiber bundles with a matrix resin composition so as to use the tow prepreg in the FW step. In such a case, the tow prepreg is wound onto a rotating mandrel at a predetermined tension and angle.
Using a tow prepreg in FW molding offers various advantages. For example, using a tow prepreg eliminates the step for handling an uncured matrix resin composition in a process for producing pressure vessels, thus improving the working environment. Also, since the manufacturing process does not include an impregnation step, the FW step is expedited. Moreover, since a tow prepreg prepared to have a controlled ratio of matrix resin composition is used, the obtained molded products exhibit consistent high quality.
The characteristics required for a tow prepreg are: a predetermined amount of matrix resin composition sufficiently impregnated in reinforcing fiber bundles; high-speed unwinding performance from a spool; and absence of problems such as the tow prepreg becoming folded and wound on a mandrel in an FW step.
A tow prepreg is usually wound on a bobbin such as a paper tube and is unwound from the bobbin when it is used. To unwind a tow prepreg at high speed, the tack of the tow prepreg needs to be weak. One of the methods to decrease the tack of a tow prepreg is to use a resin composition with low viscosity as the matrix resin composition to be impregnated into reinforcing fiber bundles (Patent Literature 1). Also, as a method for decreasing the tack of a tow prepreg while maintaining its excellent shape retention properties, the viscosity of a matrix resin composition may be increased to a level that will not cause tackiness at the temperature of the environment where the tow prepreg is used (normally at room temperature) (Patent Literature 2).

CITATION LIST

PATENT LITERATURE

Patent Literature 1: JP H09-087365A
Patent Literature 2: JP S55-015870A

SUMMARY OF THE INVENTION

PROBLEMS TO BE SOLVED BY THE INVENTION

However, if a low viscosity matrix resin composition is used as in the technology disclosed in Patent Literature 1, the tow prepreg may become folded when going through a guide roll or the like in an FW step, and its shape may be significantly changed. In addition, since a tow prepreg is usually wound on a paper tube under tension of a few hundred grams to 1 kilogram, the matrix resin composition may be squeezed out from the tow prepreg during the winding process, resulting in such a problem as to cause the content of the matrix resin composition in the tow prepreg to be higher on the paper tube side than on the other side (outer-surface side) (such a phenomenon hereinafter being referred to as "winding-squeezing").

On the other hand, using a high viscosity matrix resin composition disclosed in Patent Literature 2, it is difficult to sufficiently impregnate the resin composition into a reinforcing fiber bundle. In Patent Literature 2, after the matrix resin composition is dissolved in a solvent and impregnated into a reinforcing fiber bundle, the solvent is removed by applying heated air on the bundle. However, in such a method some of the solvent may remain in the tow prepreg. The remaining solvent causes voids in the fiber-reinforced composite material produced by using the tow prepreg, and the strength and quality of the composite material are thereby significantly decreased.

Considering the aforementioned problems, the objective of the present invention is to provide a tow prepreg that exhibits excellent unwinding performance from a spool, excellent processability and shape retention capability during an FW step, as well as to provide a pressure vessel formed by using the tow prepreg so as to achieve high tank burst pressure and high fatigue strength. The objective also entails providing their manufacturing methods.

SOLUTIONS TO THE PROBLEMS

To solve the aforementioned problems, the inventors of the present invention have carried out intensive studies and found that those problems are solved by using a tow prepreg that satisfies specific conditions. Namely, the present invention has aspects as follows.

[1] A tow prepreg made by impregnating a reinforcing fiber bundle with a matrix resin composition containing components (A), (B) and (C') specified below:

Component (A): epoxy resin
Component (B): epoxy resin curing agent
Component (C'): pre-gelatinizing agent with a minimum viscosity temperature of 110°C or lower

Here, the temperature of minimum viscosity is determined to be the temperature obtained at the minimum viscosity that appears on the highest temperature side when a sample is prepared by adding and dispersing homogeneously 10 parts by mass of the component (C') to 100 parts by mass of bisphenol-A epoxy resin with an epoxy equivalent weight of 190 ±6 g/eq, and by dissolving 10 parts by mass of a boron trichloride-octylamine complex into the mixture, and when the viscosity of the sample is measured by increasing the temperature at a rate of 2°C/min.

[2] The tow prepreg according to [1] above, in which the component (C') consists of core-shell particles.

[3] The tow prepreg according to [2] above, in which the core-shell particles are structured to have a core layer, which is a polymer made by polymerizing (meth)acrylate, and a shell layer, which is a polymer made by polymerizing at least one selected from among (meth)acrylate, a functional group-containing (meth)acrylate and a carboxyl group-containing vinyl monomer.

[4] The tow prepreg according to any of [1]~[3] above, in which the original particle shape is not observed in any magnification when the component (C') is treated as follows:
Observation method: a sample is prepared by adding and dispersing homogeneously 10 parts by mass of the component (C') to 100 parts by mass of bisphenol-A epoxy resin with an epoxy equivalent weight of 190 ±6 g/eq, and by dissolving 10 parts by mass of a boron trichloride-amine complex into the mixture, and the sample is poured into a 3 mm-thick mold and cured for 2 hours at 110°C; the 3 mm-thick cured resin plate is fractured the same as in measuring the fracture toughness value of a cured resin in accordance with ASTM D5045; and the fractured surface of the cured resin piece is observed at a magnification of 1000~10000 times by using a scanning electron microscope.

[5] The tow prepreg according to any of [1]~[4] above, in which the component (B) is a boron trihalide-amine complex.

[6] The tow prepreg according to any of [1]~[5] above, in which the component (B) is a boron trichloride-amine complex.

[7] The tow prepreg according to any of [1]~[6] above, in which the viscosity of the matrix resin composition at 30°C is set at 5 Pa·s to 300 Pa·s.

[8] The tow prepreg according to any of [1]~[7] above, in which relative to 100 parts by mass of the matrix resin composition, the content of component (A) is set at 30 to 96.5 parts by mass, the content of component (B) is set at 0.5 to 50 parts by mass, and the content of component (C') is set at 3 to 20 parts by mass.

[9] The tow prepreg according to any of [1]~[8] above, in which the reinforcing fiber bundle is a carbon fiber bundle.

[10] A composite material pressure vessel manufactured by using a tow prepreg according to any of [1]~[9] above.

[11] The composite material pressure vessel according to [10] above, manufactured by winding the tow prepreg on a liner.

[12] A composite material pressure vessel, manufactured by using a tow prepreg formed by impregnating a reinforcing fiber bundle with a matrix resin composition that contains components (A), (B) and (C) below:

> Component (A): epoxy resin
> Component (B): epoxy resin curing agent
> Component (C): pre-gelatinizing agent

[13] A method for manufacturing a composite material pressure vessel, including:

> an impregnation step for preparing a resin-impregnated reinforcing fiber bundle by impregnating a reinforcing fiber bundle with a matrix resin composition that contains components (A), (B) and (C) below;
> a winding step for forming a tow prepreg by winding the resin-impregnated reinforcing fiber bundle on a bobbin such as a paper tube;
> an unwinding step for pulling out the tow prepreg from the bobbin;
> a filament-winding step for obtaining a pressure vessel intermediate by winding the unwound tow prepreg on a liner; and
> a curing step for curing the matrix resin composition contained in the resin-impregnated reinforcing fiber bundle by applying heat on the pressure vessel intermediate.

>> Component (A): epoxy resin
>> Component (B): epoxy resin curing agent
>> Component (C): pre-gelatinizing agent

[14] A method for manufacturing a composite material pressure vessel, including:

> an impregnation step for forming a resin-impregnated reinforcing fiber bundle by impregnating a reinforcing fiber bundle with a matrix resin composition that contains components (A), (B) and (C) below;
> a filament-winding step for obtaining a pressure vessel intermediate by winding the resin-impregnated reinforcing fiber bundle on a liner; and
> a curing step for curing the matrix resin composition contained in the resin-impregnated reinforcing fiber bundle by applying heat on the pressure vessel intermediate.

>> Component (A): epoxy resin
>> Component (B): epoxy resin curing agent
>> Component (C): pre-gelatinizing agent

[15] The method for manufacturing a composite material pressure vessel according to [13] or [14] above, in which a minimum viscosity temperature of the component (C) is 110°C or lower.

Here, the temperature of minimum viscosity is determined to be the temperature obtained at the minimum viscosity that appears on the highest temperature side when a sample is prepared by adding and dispersing homogeneously 10 mass parts of the component (C) to 100 parts by mass of bisphenol-A epoxy resin with an epoxy equivalent weight of 190 ±6 g/eq, and by dissolving 10 parts by mass of a boron trichloride-octylamine complex into the mixture, and when the viscosity of the sample is measured by increasing the temperature at a rate of 2°C/min.

EFFECTS OF THE INVENTION

Because of a pre-gelatinizing agent, which exists as particles in a matrix resin composition at normal temperature but is dissolved in the matrix resin composition, more specifically, in the component (A): epoxy resin, or swollen by the epoxy resin at a higher temperature, the tow prepreg of the present invention exhibits excellent unwinding performance of the fiber bundle from the spool, along with excellent processability and shape retention capability of the fiber bundle in the FW step. Also, when the tow prepreg is used for manufacturing a pressure vessel, it exhibits high tank burst pressure and high fatigue strength.

Here, "high fatigue strength" indicates that when pressure cycle testing is conducted by repeatedly exerting consistent inner pressure on a pressure vessel, damage to the pressure vessel causing leaks will not occur until after numerous tests are conducted.

BRIEF DESCRIPTION OF THE DRAWINGS

FIG. 1 is an observation image showing a fractured surface of an example of component (C) (vinyl polymer (P1)) according to the present invention;
FIG. 2 is an observation image showing a fractured surface of another example of component (C) (vinyl polymer (P2)) according to the present invention;
FIG. 3 is an observation image showing a fractured surface of yet another example of component (C) (vinyl polymer (P3)) according to the present invention;
FIG. 4 is an observation image showing a fractured surface of yet another example of component (C) (vinyl polymer (P4)) according to the present invention;
FIG. 5 is an observation image showing a fractured surface of yet another example of component (C) (vinyl polymer (P5)) according to the present invention;
FIG. 6 is an observation image showing a fractured surface of yet another example of component (C) (vinyl polymer (P6)) according to the present invention;
FIG. 7 is an observation image showing a fractured surface of an example of conventional nylon particles (2001UD NAT1);
FIG. 8 is an observation image showing a cross section of an example of the composite material pressure vessel according to Example 1 of the present invention;
FIG. 9 is an observation image showing a cross section of another example of the composite material pressure vessel according to Example 7 of the present invention;
FIG. 10 is an observation image showing a cross section of yet another example of the composite material pressure vessel according to Comparative Example 2 of the present invention; and
FIG. 11 is an observation image showing a cross section of yet another example of the composite material pressure vessel according to Comparative Example 3 of the present invention.

DETAILED DESCRIPTION OF THE EMBODIMENTS

An embodiment of the present invention is a tow prepreg formed by impregnating a reinforcing fiber bundle with a matrix resin composition that contains components (A), (B) and (C') below.

Component (A): epoxy resin
Component (B): epoxy resin curing agent
Component (C'): pre-gelatinizing agent with a minimum viscosity temperature of 110°C or lower

Here, the temperature of minimum viscosity is determined to be the temperature obtained at the minimum viscosity that appears on the highest temperature side when a sample is prepared by adding and dispersing homogeneously 10 mass parts of the component (C') to 100 parts by mass of bisphenol-A epoxy resin with an epoxy equivalent weight of 190 ±6 g/eq, and by dissolving 10 parts by mass of a boron trichloride-octylamine complex into the mixture, and when the viscosity of the sample is measured by increasing the temperature at a rate of 2°C/min.

The present invention is described below in detail.

Epoxy resin is referred to as the term for a category of thermosetting resins or as the term for a category of chemical substances, that is, a chemical compound having one or more epoxy groups in the molecule. The latter meaning is applied in the embodiments of the present invention.

<Tow Prepreg>

A tow prepreg is a narrow intermediate obtained by impregnating a matrix resin composition into a few to scores of thousands of unidirectionally aligned reinforcing fiber filaments and by winding them on a bobbin such as a paper tube. In the embodiments of the present invention, a reinforcing fiber bundle wound on a bobbin or unwound from the bobbin thereafter is referred to as a "tow prepreg," whereas a reinforcing fiber bundle simply impregnated with a matrix resin composition is referred to as a "resin-impregnated reinforcing fiber bundle."

A tow prepreg related to the present invention is obtained by impregnating a reinforcing fiber bundle with a matrix resin composition used in the embodiment of the present invention as described later. The fiber diameter and the number of filaments of the reinforcing fiber bundle are not specifically limited, but the fiber diameter is preferred to be set at 3 $\mu$m to 50 $\mu$m, more preferably 4 $\mu$m to 30 $\mu$m, especially preferably 5 $\mu$m to 15 $\mu$m. The number of filaments is preferred to be 1,000 to 70,000, more preferably 6,000 to 60,000, especially preferably 12,000 to 50,000. In the present application, a "fiber diameter" means the diameter of a circle having an area equivalent to the cross section of each fiber. A conventional method is applied when the cross-sectional area of a fiber is measured.

If the fiber diameter is less than 3 $\mu$m, breakage or fuzz of filaments may occur during various processing steps when filaments make a horizontal movement on the surface of a roll or bobbin (movement in a direction perpendicular to the fiber axis direction; the same definition applies hereinafter). If the fiber diameter exceeds 50 $\mu$m, the filaments are hardened, and the flexibility tends to be lowered.

Examples of a reinforcing fiber bundle to be used in the embodiments of the present invention are those normally employed to form fiber-reinforced composite material, namely, glass fibers, carbon fibers (note that graphite fibers are also defined as carbon fibers in the present invention), aramid fibers, boron fibers and the like. Especially preferred is a carbon fiber with a strand strength of 3500 MPa or greater, more preferably 4500 MPa or greater, even more preferably 5000 MPa or greater, when measured in accordance with JIS R 7601. Especially, for use in pressure vessels and tendons, it is more preferable to use a carbon fiber bundle with stronger strand strength.

If the reinforcing fiber bundle is made of carbon fibers, the fiber diameter of filaments is preferred to be 3 $\mu$m to 12 $\mu$m, more preferably 4 $\mu$m to 9 $\mu$m, especially preferably 4 $\mu$m to 7 $\mu$m. The number of filaments is preferred to be 1,000 to 70,000, more preferably 6,000 to 60,000, especially preferably 12,000 to 50,000. If the fiber diameter is less than 3 $\mu$m, breakage or fuzz of filaments may occur during various processing steps when filaments move horizontally on the surface of a roll or spool. The upper limit of the fiber diameter is 12 $\mu$m, since a diameter beyond that makes it difficult to produce carbon fibers.

<Tack of Tow Prepreg>

The tack of a tow prepreg is measured as the average maximum stress value.

A stress value means that of tensile stress generated on the surface of a specimen in contact with a plunger. The average maximum stress value is obtained by a tack test described below.

<Tack Test>

device: Tack Tester TA-500 (made by UBM K.K.)
area of plunger in contact with specimen: 3.1 cm$^2$
plunger pressing time: 10 sec.
plunger pressing load: 90,000 Pa
plunger lift rate: 1 mm/sec.
measurement temperature: 23°C
measurement humidity: 50%RH

Procedure:

1) Set a tow prepreg on a specimen stage and fix it to the stage. At that time, the surface of the tow prepreg to be in contact with the plunger is set to be the inner side when the tow prepreg is wound on a paper tube (namely, the surface facing the paper tube).
2) Press the plunger onto the tow prepreg for 10 seconds while exerting a downward load of 90,000 Pa.
3) Lift the plunger at a rate of 1 mm/sec.

4) Set the maximum value obtained while lifting the plunger to be the maximum stress value; conduct the test three times and obtain the average value to be used as the average maximum stress value.

The average maximum stress value of the tow prepreg related to the present invention is preferred to be 2 kPa to 50 kPa, more preferably 10 kPa to 50 kPa, especially preferably 20 kPa to 50 kPa. When the average maximum stress value is set at 2 kPa or greater, the tackiness is appropriate relative to the mandrel in an FW step, thus preventing such a problem that the tow prepreg slips on the mandrel during the winding process. Also, when the value is set at 50 kPa or less, the prepreg is pulled out from the bobbin at high speed, thus preventing such a problem that the unwound prepreg is folded before being wound on a liner.

<Viscosity of Matrix Resin Composition>

A significant factor that affects the degree of tack of a tow prepreg is the viscosity of the matrix resin composition contained in the tow prepreg, especially, the viscosity of the matrix resin composition at a temperature in an environment where the tow prepreg is used. To achieve a tow prepreg having excellent unwinding performance from a spool, excellent processability and shape retention capability in an FW step, the viscosity of a matrix resin composition at 30°C is preferred to be set at 5 Pa·s to 300 Pa·s, more preferably 10 Pa·s to 200 Pa·s, especially preferably 10 Pa·s to 100 Pa·s.

Setting the viscosity of a matrix resin composition at 30°C to be 300 Pa·s or less prevents the tack of a tow prepreg from being too high. In addition, since such a level provides the tow prepreg with appropriate drape, it is easier to wind adjacent tow prepregs on a liner without causing a gap between them. Also, setting the viscosity of a matrix resin composition at 30°C to be at least 5 Pa·s provides appropriate tack for a tow prepreg containing the composition, and the tow prepreg exhibits appropriate tackiness relative to a mandrel, thereby preventing problems such as slipping off from the mandrel during the winding process. In addition, the tow prepreg will not become too soft, and a change in shape is suppressed when it passes through a guide roll in the FW step.

The viscosity is measured under following conditions.

    device: AR-G2 (made by TA Instruments)
    plate: 35 mm φ parallel plate
    plate gap: 0.5 mm
    frequency: 10 rad/sec.
    measurement temperature: 30°C
    stress: 300 Pa

<Content of Matrix Resin Composition>

Another significant factor that affects the degree of tack of a tow prepreg is the content of the matrix resin composition.

The content of the matrix resin composition in a tow prepreg related to the present invention is preferred to be set at 20 mass% to 40 mass% of the total mass of the tow prepreg. Setting the content to be 20 mass% or greater makes it easier to disperse a sufficient amount of matrix resin composition in the reinforcing fiber bundle, thus formation of numerous voids is prevented in the molded product. Setting the content of matrix resin composition to be 40 mass% or less prevents its tack level from being too high. In addition, since the volume ratio of fibers in fiber-reinforced composite material is increased, mechanical characteristics are effectively expressed. To enhance properties such as excellent unwinding performance, excellent processability and shape retention capability in production steps while expressing mechanical characteristics more effectively, the content of the matrix resin composition in a tow prepreg is more preferred to be set at 20 mass% to 30 mass%.

<Matrix Resin Composition>

A matrix resin composition to be used in the embodiments of the present invention contains components (A)~(C) below.

    component (A): epoxy resin
    component (B): epoxy resin curing agent
    component (C): pre-gelatinizing agent

<Component (A)>

Component (A) is epoxy resin.

As for the component (A), it is preferred to mainly use a bifunctional epoxy resin having an aromatic ring in the molecule. By using a bifunctional epoxy resin having an aromatic ring in the molecule, the viscosity of the matrix resin composition is adjusted to be in an appropriate range, while the mechanical characteristics of the cured product are also adjusted appropriately.

Here, "bifunctional epoxy resin" above means a chemical compound having two epoxy groups in the molecule.

Examples of the aromatic ring in bifunctional epoxy resin having an aromatic ring in the molecule are a benzene ring, naphthalene ring, fluorene ring and the like.

Examples of bifunctional epoxy resin having an aromatic ring in the molecule are, but are not limited to, diglycidyl-ether type epoxy resins such as bisphenol-A, bisphenol-F, bisphenol-S, resorcinol, hydroquinone, bisphenoxyethanolfluorene, bisphenol fluorene, biscresol fluorene and novolac epoxy resins; diglycidyl-ester type epoxy resins such as diglycidyl esters of terephthalic acid and hexahydrophthalic acid; and the like. They may be used alone or in combination thereof.

Among the various types of bifunctional epoxy resins having an aromatic ring in the molecule, liquid bisphenol-A epoxy resin with an epoxy equivalent weight ranging from 170 g/eq to 200 g/eq is especially preferred, since it is easier to adjust the viscosity of the matrix resin composition at an appropriate level, and to appropriately adjust the mechanical characteristics of the cured product.

In addition to the bifunctional epoxy resin having an aromatic ring in the molecule, various types of epoxy resin may also be used in an effort to enhance heat resistance and to adjust viscosity. For example, trifunctional or higher epoxy resins, and epoxy resins having an aliphatic skeleton may be used. Examples of trifunctional epoxy resin are triazine skeleton-containing epoxy resins, aminophenol epoxy resins, aminocresol epoxy resins and the like. Examples of tetrafunctional or higher epoxy resin are cresol novolac, phenol novolac, and aromatic glycidyl amine epoxy resins. Examples of aliphatic skeleton-containing epoxy resin are aliphatic epoxy resins with linear chains such as butanediol diglycidyl ether, hexanediol diglycidyl ether, and trimethylolpropane triglycidyl ether; and cycloaliphatic epoxy resins such as cyclohexanedimethanol diglycidyl ether, diglycidyl ester of hexahydrophthalic acid, and hydrogenated bisphenol-A epoxy resin.

Especially, it is preferred to include epoxy resin having a cycloaliphatic structure, since component (C): pre-gelatinizing particles are better dissolved in component (A) or are more likely to be swollen by component (A), in a step for curing the matrix resin composition contained in a resin-impregnated reinforcing fiber bundle or a tow prepreg. Moreover, containing such a type of epoxy resin contributes to achieving effects, for example, easier adjustment of the viscosity of the matrix resin composition in a range suitable for manufacturing a tow prepreg, and a high level of heat resistance of the cured product.

The content of the above-specified type epoxy resin may differ depending on the type and purpose of combining resin, but is preferred to be selected so as to set the viscosity at 30°C of the matrix resin composition used in the present invention to be in the aforementioned range. Normally, the content is preferred to be set at 5 to 10 parts by mass, more preferably 10 to 40 parts by mass, especially preferably 20 to 35 parts by mass, relative to 100 parts by mass of component (A): epoxy resin. Here, the sum of components (A), (B) and (C) does not exceed 100 parts by mass.

The content of component (A) is preferred to be set at 40 to 96.5 parts by mass, more preferably 50 to 95 parts by mass, especially preferably 60 to 90 parts by mass, relative to 100 parts by mass of a matrix resin composition. The content of component (A) is preferred to be set at 40 to 96.5 parts by mass, since the strength of the epoxy resin cured products is sufficiently expressed.

<Component (B)>

Component (B) is an epoxy resin curing agent.

An epoxy resin curing agent is not limited to having any specific structure as long as it is capable of curing epoxy resin. For example, amines, acid anhydrides (carboxylic acid anhydrides), phenol (novolac resins), mercaptans, amine complexes of Lewis acid, onium salt, imidazole and the like.

Among them, acid anhydrides and amine complexes of Lewis acid are preferred, since they are compatible with a matrix resin to be homogeneously blended in, and have excellent pot life.

Examples of acid anhydrides are hexahydrophthalic anhydride, tetrahydrophthalic anhydride, methylhexahydrophthalic anhydride, methyl nadic anhydride and the like.

Examples of amine complexes of Lewis acid are amine complexes of boron halides and the like, more specifically, boron trifluoride-amine complexes such as boron trifluoride-piperidine complex, boron trifluoride-monoethylamine complex and boron trifluoride-triethanolamine complex; boron trichloride-amine complexes such as boron trichloride-octylamine complex; and the like.

Among those amine complexes of Lewis acid, boron trichloride-amine complexes are especially preferred since they have excellent compatibility with epoxy resins, provide excellent pot life for a matrix resin composition that contains the complex, and make the matrix resin composition curable at a low temperature for a shorter period of time.

When the active hydrogen equivalent weight (neutralization equivalent weight if it is an acid anhydride) of the epoxy resin curing agent is required, the content of component (B): epoxy resin curing agent in a matrix resin composition is preferred to have an active hydrogen equivalent weight at a ratio of 0.3 to 1.0, more preferably 0.4 to 0.8, relative to 1 epoxy equivalent weight of component (A): epoxy resin. When the ratio of active hydrogen equivalent weight is 0.3 or higher, epoxy resin is sufficiently cured, and when the ratio is 1.0 or lower, the rigidity of the cured product of matrix resin composition is enhanced.

When a compound such as a boron halide-amine complex is used as component (B): epoxy resin curing agent, where no active hydrogen equivalent weight is available, the content of component (B): epoxy resin curing agent is preferred to be set at 0.5 to 50 parts by mass, more preferably 2 to 30 parts by mass, especially preferably 4 to 15 parts by mass, relative to 100 parts by mass of the matrix resin composition, although such a content may vary depending on the type of curing agent. A content of component (B): epoxy resin curing agent set to be at least 0.5 parts by mass is capable of sufficiently curing epoxy resin, and a content of no greater than 50 parts by mass is capable of increasing the heat resistance of the matrix resin composition.

<Component (C)>

Component (C) is a pre-gelatinizing agent.

A "pre-gelatinizing agent" in the embodiments of the present invention is vinyl polymer particles with an average particle diameter of 2.0 μm or smaller obtained by emulsion or suspension polymerization; it exists as particles in a matrix resin composition at normal temperature (10~30°C), but at a higher temperature (such as approximately 50~110°C), it is quickly dissolved in the matrix resin composition, in particular, in component (A), or it becomes swollen by component (A).

Namely, since component (C) is present as particles in a matrix resin composition having a relatively low temperature such as normal temperature, component (C) particles enter the space between single fibers of reinforcing fiber bundles and increase the volume of the space between the single fibers. Accordingly, a greater amount of matrix resin composition is contained (impregnated) in a tow prepreg obtained by impregnating a resin composition that includes component (C). Since the amount of matrix resin composition that is present on the tow prepreg surface is reduced, the tack will not be so high, resulting in a tow prepreg with excellent unwinding performance and ease of handling. Meanwhile, component (C) is dissolved in or swollen by component (A): epoxy resin of a matrix resin composition at a temperature between normal temperature and the temperature that progresses the reaction of component (A): epoxy resin and component (B): epoxy resin curing agent. Accordingly, in a fiber-reinforced composite material produced by using the tow prepreg, there is hardly any formation of voids caused by the presence of particles, and a molded product with high strength is thereby achieved. Therefore, a composite material pressure vessel manufactured by using the tow prepreg related to the present invention achieves high tank burst pressure.

The invention according to the claims is directed to component (C'): pre-gelatinizing agent with a minimum viscosity temperature of 110°C or lower.

In the present application, the temperature of minimum viscosity is determined to be the temperature obtained at the minimum viscosity that appears on the highest temperature side when a sample is prepared by adding and dispersing homogeneously 10 mass parts of the component (C') to 100 parts by mass of bisphenol-A epoxy resin with an epoxy equivalent weight of 190±6 g/eq, and by dissolving 10 parts by mass of a boron trichloride-octylamine complex into the mixture, and when the viscosity of the sample is measured by increasing the temperature at a rate of 2°C/min. It is known that adding component (C') may delay curing of the matrix resin composition. However, using component (C') with a minimum viscosity temperature of 110°C or lower, delayed curing of matrix resin composition is prevented, and the composition is cured at a lower temperature in a shorter period time. Since the composition is curable at a temperature of 110°C or lower, a polyethylene liner with lower heat resistance can be used, reducing the manufacturing cost of composite material pressure vessels. In addition, since the composition is curable in a shorter period of time, efficiency in the molding cycle is enhanced.

The following provides detailed descriptions regarding component (C) such as the average particle diameter, observation results of particle shapes under a specific method, viscosity increase over time of a resin composition containing component (C), particle shape, type of monomer, manufacturing method, content in a matrix resin composition and the like. Those descriptions also apply to component (C').

The average particle diameter of component (C) is usually 2.0 μm or smaller. Here, the average particle diameter means the volume mean diameter of 100 primary particles measured by using a scanning electron microscope. The average particle diameter is preferred to be set at 0.1 μm to 2.0 μm, more preferably 0.5 μm to 1.0 μm. When a pre-gelatinizing agent with an average particle diameter of less than 0.1 μm is used as component (C), component (C) becomes more unstable to heat as the size becomes smaller; namely, component (C) is easier to dissolve in component (A). Thus, component (C) may be dissolved in component (A) during the preparation of a matrix resin composition or during the production of a tow prepreg. On the other hand, if component (C) is a pre-gelatinizing agent with an average diameter of primary particles greater than 2.0 μm, component (C) is filtered out on the reinforcing fiber surfaces while the matrix resin composition is impregnated in a reinforcing fiber bundle, thus component (C) is not distributed well in the reinforcing fiber bundle. Accordingly, the effects of suppressing the tack of tow prepreg may not be achieved well. The average particle diameter of 0.1 μm to 2.0 μm makes component (C) stable enough to heat, namely, not so easily dissolved in component (A). Therefore, component (C) is prevented from being dissolved in component (A) during the preparation of a matrix resin composition or during the production of a tow prepreg. Also, since component (C) is not filtered out on the reinforcing fiber surfaces when the matrix resin composition is impregnated in a reinforcing fiber bundle, component (C) is well dispersed into the reinforcing fiber bundle, thereby effectively suppressing the tack of the tow prepreg.

Moreover, component (C) is preferred to be a type where no particle shape is observed when analyzed by the following method: a sample is prepared by adding and dispersing homogeneously 10 mass parts of component (C) to 100 parts by mass of bisphenol-A epoxy resin with an epoxy equivalent weight of 190 ±6 g/eq, and by dissolving 10 parts by mass of a boron trichloride-amine complex into the mixture, and the sample is cured at 110°C for 2 hours to obtain a cured product; and when a cross section of the cured product is observed by a scanning electron microscope at a magnification of 1000 to 10000 times, it is preferred that no original particle shape of component (C) be visible.

Such component (C) exists as particles in a tow prepreg, but disappears by being dissolved in the matrix resin composition or swollen by the matrix resin composition at a temperature generally employed for molding a tow prepreg. Therefore, formation of voids is suppressed in the resultant fiber-reinforced composite material, and a pressure vessel having a higher tank burst pressure and a longer fatigue lifespan is thereby provided.

In addition, the viscosity at 25°C of the above sample measured a week later is preferred to be no greater than 1.5 times the viscosity measured right after it was prepared. It is preferred to use a pre-gelatinizing agent that is unlikely to cause a viscosity increase of the resin composition over time since higher storage stability is provided for the tow prepreg containing such an agent.

As for a pre-gelatinizing agent, its internal morphology is not limited specifically, and the various factors such as the polymer composition, molecular weight, glass transition temperature, solubility parameters or the like may be uniform. Also, the agent may have various generally recognized particle morphologies such as a core-shell structure and gradient structure. It is preferred to have a core-shell structure and concentric morphology with two or more layers. To control the internal morphology of a pre-gelatinizing agent, it is an option to make multilayer particles by setting different solubility parameters and molecular weights on the inner and outer side of particles. Such a method is preferred since it is easier to achieve both the storage stability (pot life) and the gelation speed of the matrix resin composition.

Examples of radical-polymerizable vinyl monomers are (meth) acrylates such as methyl (meth)acrylate, ethyl (meth)acrylate, n-propyl (meth)acrylate, i-propyl (meth)acrylate, n-butyl (meth)acrylate, t-butyl (meth)acrylate, i-butyl (meth)acrylate, n-hexyl (meth)acrylate, n-octyl (meth)acrylate, 2-ethylhexyl (meth)acrylate, cyclohexyl (meth)acrylate, benzyl (meth)acrylate , phenyl (meth)acrylate, nonyl (meth)acrylate, decyl (meth)acrylate, dodecyl (meth)acrylate, stearyl (meth)acrylate, t-butyl cyclohexyl (meth)acrylate, isobornyl (meth)acrylate, tricyclo $[5.2.1.0^{2,6}]$ decan-8-yl-methacrylate, and dicyclopentadienyl (meth)acrylate; aromatic vinyl monomers such as styrene, α-methyl styrene, and vinyl toluene; hydroxyl group-containing (meth) acrylates such as hydroxymethyl (meth)acrylate, 2-hydroxyethyl (meth)acrylate, 2-hydroxypropyl (meth)acrylate, 2-hydroxybutyl (meth)acrylate, 4-hydroxybutyl (meth)acrylate, and glycerol mono (meth)acrylate; functional group (other than hydroxyl group)-containing (meth)acrylates such as glycidyl (meth)acrylate, N, N-dimethylaminoethyl (meth)acrylate, and N-methyl-2,2,6,6-tetramethyl-piperidyl (meth)acrylate; carboxyl group-containing vinyl monomers such as acrylic acid, methacrylic acid, crotonic acid, maleic acid, itaconic acid, fumaric acid, isocrotonic acid, salicylic acid, vinyloxy acetic acid, allyloxy acetic acid, 2-(meth)acryloyl propanoic acid, 3-(meth)acryloyl butanoic acid, and 4-vinyl benzoic acid; vinyl cyanide monomers such as (meth)acrylonitrile; itaconic acid esters such as (meth)acrylamide, monomethyl itaconate, monoethyl itaconate, monopropyl itaconate, monobutyl itaconate, dimethyl itaconate, diethyl itaconate, dipropyl itaconate, and dibutyl itaconate; fumaric acid esters such as monomethyl fumarate, monoethyl fumarate, monopropyl fumarate, monobutyl fumarate, dimethyl fumarate, diethyl fumarate, dipropyl fumarate, and dibutyl fumarate; maleic acid esters such as monomethyl maleate, monoethyl maleate, monopropyl maleate, monobutyl maleate, dimethyl maleate, diethyl maleate, dipropyl maleate, and dibutyl maleate; and other vinyl monomers such as vinylpyridine, vinyl alcohol, vinyl imidazole, vinyl pyrrolidone, vinyl acetate, and 1-vinylimidazole. In the present application, (meth) acrylates indicate acrylates or methacrylates.

Those monomers listed above may be used alone or in combination thereof.

When component (C): pre-gelatinizing agent has a core-shell structure, the polymer to construct the core layer is preferred to be made of a (meth)acrylate listed above, and the polymer to construct a shell layer is preferred to be made of a monomer selected from among the above-listed (meth)acrylates, other functional group-containing (meth)acrylates, and carboxyl group-containing vinyl monomers.

Vinyl polymer particles are manufactured by polymerizing vinyl monomers listed above while adding a polymerization initiator, emulsifier, dispersion stabilizer, chain transfer agent or the like if applicable. A polymerization initiator, emulsifier, dispersion stabilizer, chain transfer agent or the like may be selected from known materials, for example, those described in PCT publication WO/2010/090246 or the like.

To polymerize a monomer, since it is easier to obtain spherical particles and to control particle morphology, a method is preferred to be selected from among polymerization techniques such as emulsion, soap-free emulsion, swelling, mini-emulsion, dispersion, and fine-suspension. Among those methods, soap-free emulsion is preferred since a polymer with excellent dispersion is obtained. As for an industrially highly practical method to control the internal morphology of vinyl polymer particles, vinyl monomer mixtures containing monomers with different compositions may be dropped consecutively so that the mixtures are polymerized in multiple stages.

By spray-drying the polymer emulsion, vinyl polymer particles are obtained to be used as a component (C) or (C'): pre-gelatinization agent.

To determine whether the vinyl polymer particles have a core-shell structure, it is an option to see if sample polymer particles satisfy both of the following at the same time: the particle diameter of polymer particles sampled during a polymerization process is surely growing; and the minimum film-forming temperature (MFT) and solubility in various solvents are changed in polymer particles sampled during the polymerization process. It is also an option to observe a section of the polymer by a transmission electron microscope (TEM) to verify the presence of a concentric structure, or to observe a frozen-fractured section of the polymer by a scanning electron microscope (Crio SEM) to verify the presence of a concentric structure.

The amount of component (C): pre-gelatinizing agent to be added in a matrix resin composition is not limited specifically, but is preferred to be set at 3 to 40 parts by mass, more preferably 5 to 25 parts by mass, relative to 100 parts by mass of the matrix resin composition. By setting the amount to be at least 3 parts by mass, the tow prepreg will not be too tacky, and by setting the amount to be no greater than 40 parts by mass, the tow prepreg will be appropriately tacky. Also, when a molded product is produced from the tow prepreg, formation of numerous voids is prevented so as to avoid lowered fatigue strength of a pressure vessel manufactured from the molded product.

When component (C): pre-gelatinizing agent is kneaded with other components to prepare a matrix resin composition, a known kneading apparatus may be used.

Examples of a kneading apparatus are a mortar machine, attritor, planetary mixer, dissolver, three-mill roll, ball mill and beads mill. They may be used in combination thereof.

When components are kneaded to prepare a matrix resin composition related to the present invention, to homogeneously disperse component (C): pre-gelatinizing agent in the matrix resin composition, it is preferred to knead component (C) in advance with a small amount of each of the other components so as to form a masterbatch, to which the remaining components are added. In addition, if a rise in the temperature of the kneaded product is observed due to heat generated by shearing force in the kneading process, it is preferred to prevent such a temperature rise by cooling the machine or adjusting kneading speed.

<Optional Component>

If applicable, a matrix resin composition related to the present invention may contain various known additives within a range that does not cause deviation from the effects of the present invention. Although not limited to the following, examples of additives are thermoplastic elastomers, elastomer fine particles, core-shell type elastomer fine particles, diluents, inorganic particles of silica or the like, carbonaceous components such as carbon nanotubes, flame retardants such as phosphorus compounds, defoaming agents or the like.

Among those listed above, to enhance rigidity without lowering the heat resistance of the cured product of the matrix resin composition, it is preferred to add core-shell type elastomer fine particles. Commercially available core-shell type elastomer fine particles are, for example, "Metablen" (made by Mitsubishi Rayon Co., Ltd.), "Staphyloid" (made by Aica Kogyo Co., Ltd.), "Paraloid" (made by Dow Chemical Company), and the like. Also, core-shell type elastomer fine particles may be obtained as an epoxy resin masterbatch in which the particles are dispersed in advance in epoxy resin. Examples of epoxy resin with dispersed core-shell elastomers are "Kane Ace" (made by Kaneka Corporation), "Acryset BP series" (made by Nippon Shokubai Co., Ltd.), and the like. Since using such masterbatches makes it easier not only to prepare a matrix resin composition but to better disperse the core-shell elastomer fine particles in the matrix resin composition, it is preferred to use epoxy resin with dispersed core-shell type elastomer particles.

<Method for Manufacturing Tow Prepreg>

A tow prepreg related to the present invention is manufactured by taking a preparation step for preparing a matrix resin composition containing components (A), (B) and (C) described above, an impregnation step for forming a resin-impregnated reinforcing fiber bundle by impregnating the matrix resin composition into a reinforcing fiber bundle, and a winding step for winding the resin-impregnated reinforcing fiber bundle onto a bobbin such as a paper tube.

A known method may be employed for impregnation and winding steps, and the following steps (1)~(4) are preferred to be included:

step (1): apply tension on the reinforcing fiber bundle pulled out from the spool (apply heat, if applicable) to enlarge the width;

step (2): supply a predetermined amount (so as to disperse the matrix resin composition by a certain amount per unit area of reinforcing fiber bundle) of the matrix resin composition (heated if applicable) to at least one surface of the widened reinforcing fiber bundle;

step (3): impregnate a fiber reinforcing fiber bundle with the supplied matrix resin composition for forming a resin-impregnated reinforcing fiber bundle; and

step (4): wind the resin-impregnated reinforcing fiber bundle (cool to approximately room temperature if applicable) on a bobbin such as a paper tube.

A reinforcing fiber bundle to be impregnated with the matrix resin composition is preferred to be a flat shape with an enlarged width so as to increase the area in contact with the matrix resin composition.

To widen a reinforcing fiber bundle, applying friction force on the bundle at a cylindrical bar, applying vibrations on the bundle, crushing the bundle or the like may be employed.

Furthermore, when widening a reinforcing fiber bundle, the fiber bundle is preferred to be heated. The temperature may vary depending on the sizing agent attached to the reinforcing fiber. It is usually preferred to heat the fiber bundle at approximately 50~150°C. In addition, heating a reinforcing fiber bundle during a widening process contributes to effectively preventing the lowering of the temperature of a matrix resin composition to be impregnated into the reinforcing fiber bundle in the following step (3). Heating a fiber bundle is not limited to a specific method, and heating by making contact with a heating body, heating by infrared beams, non-contact heating in a heated atmosphere or the like may be employed.

Widening a reinforcing fiber bundle in step (1) above may be conducted inline or offline. For example, a commercially available widened tape-shape reinforcing fiber bundle is referred to as a reinforcing fiber bundle widened offline.

Examples of methods for supplying a matrix resin composition to a reinforcing fiber bundle are "resin bath method": pass a tow through a resin bath to impregnate the tow with the matrix resin composition and adjust the resin content by squeezing out the excess resin composition by narrowing an orifice, using rolls or the like; "rotating roll method": form a layer of a matrix resin composition on a rotating roll and transfer the layer to a tow (for example, an impregnation method by using a rotating drum equipped with a doctor blade); "on-paper transfer method": form a layer of a matrix resin composition on a sheet of paper, and transfer the layer to a tow; "nozzle dropping method": methods described in JP H09-176346A, JP2005-335296A, JP2006-063173A and the like; "contact with resin and tow transfer method": methods described in JP H08-073630A, JP H09-031219A and the like; and so on.

A rotating roll method or a contact with resin and tow transfer method is preferable among them, considering that it is easier to carry out the method and to control the supply amount of a matrix resin composition. In addition, the width of a reinforcing fiber bundle is not usually even but may vary. After the bundle is widened and shortly before or at the time of making contact with a matrix resin composition, it is effective to stabilize the width by narrowing the tow width as described in JP H08-73630A. Specifically, it is an option to form a groove with a predetermined width at or shortly behind the resin discharge port or the resin application area so that a reinforcing fiber bundle runs through the groove and has a narrowed width accordingly.

Any known method may be employed for impregnating a reinforcing fiber bundle with a matrix resin composition. Especially preferred methods are applying friction force on a reinforcing fiber bundle at a heating unit such as hot rolls or hot plates; passing the bundle supplied with a matrix resin composition through a heated furnace, namely, a heated atmosphere; and applying heat on the bundle by using a non-contact heating device such as an infrared heater. After a matrix resin composition is supplied to a reinforcing fiber bundle and before it is heated by a heating unit or when it is between heating units, it is more preferred to apply heat using a non-contact heating method so that the temperature of the reinforcing fiber bundle and the matrix resin composition will not decrease.

Moreover, in a step for impregnating a matrix resin composition into a reinforcing fiber bundle, it is preferred to change the cross-sectional shape of the bundle by exerting external force so as to move the filaments of the fiber bundle horizontally on the roll surface. By employing such a process, relative positions of the filaments are changed and the matrix resin composition and filaments will make more contact with each other. As a result, better homogeneous impregnation effects are achieved, compared with those conducted by simple compression or by capillarity.

More specific methods for changing relative positions of filaments are folding the fiber bundle, enlarging or reducing the width of the fiber bundle, twisting the fiber bundle or the like. In those procedures, folding and twisting the bundle are more likely to narrow the bundle width the same as in the width reduction procedure. When a procedure to narrow the width of a fiber bundle and a procedure to enlarge the width are both employed, homogeneous impregnation is effectively achieved. Twisting may be carried out when a matrix resin composition is impregnated; however, if no twisted condition is required after impregnation, such twist may be reversed. In addition, if friction force is applied on the fiber bundle at a bar or the like simultaneously with or shortly after the twisting procedure, the width of the fiber bundle tends to be enlarged while the matrix resin composition moves in a thickness direction of the fiber bundle. Accordingly, homogeneous impregnation is more likely to be achieved.

In order to prevent accumulation of fiber fuzz and to clean the roll, it is effective to apply friction force on the reinforcing fiber bundle by bringing the bundle into contact with a roll rotating at a circumferential speed set to be slower than the running speed of the bundle when filaments are horizontally moved on a roll surface. When friction force is applied on a reinforcing fiber bundle at the roll, the fiber will not become entangled on the roll surface and the surface of the roll in contact with the fiber bundle is constantly cleaned, since the roll rotates while being rubbed against the fiber bundle. The circumferential speed of the roll is preferred to be set at 50% to 99%, more preferably 80% to 95%, of the running speed of the reinforcing fiber bundle. A circumferential speed slower than 50% of the running speed of the reinforcing fiber bundle may cause fuzz due to stronger friction force on the fiber bundle, resulting in fiber wrapping in a later step, or problems while pulling out the tow prepreg from a bobbin that was wound thereon.

When a matrix resin composition is homogeneously impregnated into a reinforcing fiber bundle, the obtained fiber-reinforced composite material exhibits enhanced mechanical characteristics, and the effects of the present invention are thereby achieved sufficiently.

Once a reinforcing fiber bundle is homogeneously impregnated with a matrix resin composition, it is preferred to cool the bundle to approximately room temperature before proceeding to a step for winding on a paper tube. If the fiber bundle is wound on a bobbin such as a paper tube without being cooled sufficiently, the viscosity of the matrix resin composition is low, and the fiber bundle may slip on the tube to end up with a disturbed wound result. Also, since the temperature of the tow prepreg in the spool stays relatively high for a longer duration, the shelf life of the tow prepreg may be shortened. To cool a reinforcing fiber bundle, any known method such as pressing against a cooling unit or non-contact cooling may be used.

<Method for Manufacturing Composite Material Pressure Vessel>

According to an embodiment of the present invention, a composite material pressure vessel is manufactured by a method that includes: an impregnation step for preparing a resin-impregnated reinforcing fiber bundle by impregnating a reinforcing fiber bundle with a matrix resin composition that contains component (A): epoxy resin, component (B): epoxy resin curing agent and component (C): pre-gelatinizing agent; a winding step for forming a tow prepreg by winding the resin-impregnated reinforcing fiber bundle on a bobbin such as a paper tube; an unwinding step for pulling out the tow prepreg from the bobbin; a filament-winding step for obtaining a pressure vessel intermediate by winding the unwound tow prepreg on a liner; and a curing step for curing the matrix resin composition contained in the resin-impregnated reinforcing fiber bundle by applying heat on the pressure vessel intermediate.

According to another embodiment of the present invention, a composite material pressure vessel is manufactured by a method which includes: an impregnation step for forming a resin-impregnated reinforcing fiber bundle by impregnating a reinforcing fiber bundle with a matrix resin composition that contains component (A): epoxy resin, component (B): epoxy resin curing agent and component (C'): pre-gelatinizing agent; a filament-winding step for obtaining a pressure vessel intermediate by winding the resin-impregnated reinforcing fiber bundle on a liner; and a curing step for curing the matrix resin composition contained in the resin-impregnated fiber bundle by applying heat on the pressure vessel intermediate.

According to the embodiments of the present invention, a composite material pressure vessel is manufactured using component (C) having a minimum viscosity temperature of 110°C.

Here, the temperature of minimum viscosity is determined to be the temperature obtained at the minimum viscosity that appears on the highest temperature side when a sample is prepared by adding and sufficiently dispersing 10 mass parts of the component (C') to 100 parts by mass of bisphenol-A epoxy resin with an epoxy equivalent weight of 190 $\pm$6 g/eq, and by dissolving 10 parts by mass of a boron trichloride-octylamine complex into the mixture, and when the viscosity of the sample is measured by increasing the temperature at a rate of 2°C/min.

The method for manufacturing a composite material pressure vessel related to the present invention includes an impregnation step for forming a resin-impregnated reinforcing fiber bundle by impregnating a reinforcing fiber bundle with the aforementioned matrix resin composition; a filament-winding step (FW step) for winding the obtained tow prepreg or the resin-impregnated reinforcing fiber bundle on a liner; and a curing step for curing the matrix resin composition impregnated in the resin-impregnated fiber bundle by heating the pressure vessel intermediate obtained through the FW step.

Between the impregnation and FW steps, the method for manufacturing a composite material pressure vessel related to the present invention may include a winding step for forming a tow prepreg by winding on a bobbin a reinforcing fiber bundle impregnated with a matrix resin composition (namely, a "resin-impregnated reinforcing fiber bundle"), and an unwinding step for pulling out the tow prepreg from the bobbin. However, it is also an option not to go through the winding and unwinding steps but to supply the resin-impregnated fiber bundle obtained in the impregnation step directly to an FW step.

An impregnation step is to impregnate the matrix resin composition into a reinforcing fiber bundle. Specifically, such a process is carried out by employing the method described in <Method for Manufacturing Tow Prepreg> above.

The resin-impregnated reinforcing fiber bundle obtained in the impregnation step is stored by being wound on a bobbin such as a paper tube. An FW step is to wind the resin-impregnated reinforcing bundle, or a tow prepreg pulled out from a bobbin, onto a rotating liner. Here, what is obtained by winding on a liner the resin-impregnated reinforcing bundle or a tow prepreg may be referred to as a "pressure vessel intermediate."

Any known machine may be used for a filament winding machine (FW machine). To manufacture a composite material pressure vessel, a liner is used as a mandrel, on which the resin-impregnated reinforcing fiber bundle or a tow prepreg is wound. The type of an FW machine may be either for winding on a mandrel a single resin-impregnated reinforcing fiber bundle or a tow prepreg or for simultaneously winding on a mandrel multiple resin-impregnated reinforcing fiber bundles or tow prepregs.

When a resin-impregnated reinforcing fiber bundle or tow prepreg is wound on a liner, it is preferred to wind it in consideration of anisotropic characteristics of reinforcing fibers so that the structure of a layered composite material is tailored to exhibit different properties. When a resin-impregnated reinforcing fiber bundle or tow prepreg is layered and cured, it is called a composite material layer.

In the embodiments of the present invention, the structure and thickness of the composite material layer, along with the angle at which a resin-impregnated reinforcing fiber bundle or a tow prepreg is wound on a liner, may be selected as desired based on the purpose and the shape of the vessel, the anti-burst properties required for the vessel, and the like.

As for a method for winding a resin-impregnated reinforcing fiber bundle or a tow prepreg, hoop winding and helical winding are known. Conventionally, the composite material layer to reinforce the tank head is called a "helical layer" and the composite material to reinforce the tank body is called a "hoop layer."

A curing step is to cure the matrix resin composition contained in a resin-impregnated reinforcing fiber bundle or a tow prepreg by applying heat on the pressure vessel intermediate. The temperature and time for curing along with the rate of increasing/decreasing temperature are determined based on the ratio of materials in the matrix resin composition. Heat may be applied by, for example, using a vacuum bag and a heater, winding a thermal contraction tape on a liner and simultaneously applying heat and pressure on the intermediate in an oven, filling the liner with a substance for pressurizing the liner from inside and heating the intermediate while exerting inner pressure, and the like.

EXAMPLES

In the following, the present invention is described in detail by referring to the examples. However, the present invention is not limited to those examples.

The materials used for the resin composition in each example are shown in Table 1.

[Table 1]

| | Product name | Constituent |
|---|---|---|
| Component (A) | Kane Ace MX-257 (made by Kaneka Corp.) | diglycidyl ether of bisphenol-A epoxy resin with dispersed core-shell elastomer; containing 37 mass% of core-shell elastomer as optional constituent |
| | Araldite CY184 (made by Huntsman Japan) | diglycidyl hexahydrophthalate |
| | MA-DGIC | monoallyl diglycidylisocyanurate |
| Component (B) | Accelerator DY 9577 (made by Huntsman Japan) | boron trichloride-amine complex |
| | LEECURE B-550 (made by Leepoxy Plastics Inc.) | boron trihalide-amine complex |

(continued)

|  | Product name | Constituent |
|---|---|---|
| Component (C) | vinyl polymer particles (P1) | |
| | vinyl polymer particles (P2) | |
| | vinyl polymer particles (P3) | |
| | vinyl polymer particles (P4) | |
| | vinyl polymer particles (P5) | |
| | vinyl polymer particles (P6) | |
| Optional component | ORGASOL 2001UD NAT1 (made by Arkema Inc.) | fine particles of polyamide 12 average diameter: 5 $\mu$m, melting point: 177°C |
| | BYK-A 506 (made by BYK Japan K.K.) | foam-breaking polysiloxane solution |

[Producing Vinyl Polymer Particles (P1)~(P6)]

<Producing Vinyl Polymer Emulsion (L1) and Vinyl Polymer Particles (P1)>

Into a four-neck 2 L flask equipped with a thermometer, nitrogen gas inlet tube, stirrer, dropping funnel and condenser, 544.0 grams of ion-exchange water was placed, and nitrogen gas was sufficiently flowed in for 30 minutes so as to replace the dissolved oxygen in the pure water. After the nitrogen gas flow was turned off, the water temperature was raised to 80°C while the water was stirred at 200 rpm. When the internal temperature reached 80°C, monomer mixture (M1) specified in Table 2 and 0.40 grams of potassium persulfate as the polymerization initiator were added and polymerized for an hour. Then, monomer mixture (M2) in Table 2 was dropped into the mixture.

Next, after confirming that heat generation derived from polymerization of monomer mixture (M2) was no longer observed, the reaction mixture was left standing for an hour, and then monomer mixture (M3) was added.

After adding monomer mixture (M3), the reaction mixture was kept stirred for an hour at 80°C. Accordingly, polymer particle dispersion (L1) was obtained.

Polymer particle dispersion (L1) was spray-dried by using an L-8 spray drier (inlet temperature/outlet temperature =150/65°C, disc rotation speed of 25000 rpm) (made by Ohkawara Kakohki Co., Ltd.). Accordingly, vinyl polymer particles (P1) were obtained. Table 3 shows evaluation results of the obtained particles, such as average particle diameter, minimum viscosity temperature, cross-sectional image observed on the cured product, and viscosity increase over time.

<Producing Vinyl Polymer Particles (P2)~(P6)>

Polymer particle dispersions (L2)~(L6) and vinyl polymer particles (P2)~(P6) were respectively prepared by employing the same procedures as in <Producing Vinyl Polymer Emulsion (L1) and Vinyl Polymer Particles (P1)> above except that material ratios and production conditions for preparing monomer mixtures (M1), (M2) and (M3) were changed as shown in Table 2. Table 3 shows evaluation results of the obtained particles, such as average particle diameter, minimum viscosity temperature, cross-sectional image observed on the cured product, and viscosity increase over time.

[Table 2]

|  | L1 | L2 | L3 | L4 | L5 | L6 |
|---|---|---|---|---|---|---|
| Pure water (g) | 544 | 584 | 544 | 544 | 544 | 544 |

(continued)

| Monomer mixture (M1) (seed) | | | | | | | | |
|---|---|---|---|---|---|---|---|---|
| | MMA (g) | 26.1 | 26.1 | 26.1 | 26.1 | 26.1 | 30.8 |
| | n-BMA (g) | 19.9 | 19.9 | 19.9 | 19.9 | 19.9 | 17.4 |
| KPS(g) | | 0.40 | 0.40 | 0.40 | 0.40 | 0.40 | 0.80 |
| Pure water (g) | | | 19.6 | | | 16.0 | 24.0 |
| Monomer mixture (M2) (core) | | | | | | | | |
| | MMA (g) | 234.7 | 205.5 | 234.7 | 234.7 | 478.8 | 348.2 |
| | n-BMA (g) | 179.3 | 194.5 | 179.3 | 179.3 | | |
| | i-BMA (g) | | | | | | 211.8 |
| | t-BMA (g) | | | | | 169.8 | |
| | 2-HEMA (g) | | | | | 23.4 | |
| | AAEM(g) | | | 8.6 | | | |
| | Pelex OT-P (g) | 4.0 | 3.6 | 4.0 | 4.0 | 6.1 | 4.9 |
| | pure water (g) | 200.0 | 200.0 | 200.0 | 200.0 | 251.2 | 296.0 |
| KPS(g) | | | | | | | 1.60 |
| Pure water (g) | | | | | | | 40.0 |
| Monomer mixture (M3) (shell) | | | | | | | | |
| | MMA (g) | 280.8 | 382.7 | 280.8 | 280.8 | 77.0 | 219.1 |
| | i-BMA (g) | 170.4 | | 170.4 | 170.4 | | |
| | MAA (g) | 10.3 | 17.3 | 10.3 | 6.9 | | 20.9 |
| | 2-HEMA (g) | 10.4 | | 10.4 | 10.4 | 3.0 | |
| | AAEM (g) | | | 8.6 | | | |
| | OTG (g) | | | | | | 0.7 |
| | Pelex OT-P (g) | 4.0 | 4.0 | 4.0 | | 0.8 | 2.4 |
| | Emalgen 106 (g) | | 4.0 | | | | 2.4 |
| | pure water (g) | 200.0 | 200.0 | 200.0 | 200.0 | 28.0 | 120.0 |
| Time for dropping monomer mixture (M2) (min) | | 150 | 150 | 150 | 150 | 270 | 240 |
| Time for dropping monomer mixture (M3) (min) | | 150 | 150 | 150 | 150 | 30 | 90 |

Abbreviations in Table 2 are respectively referred to as the chemical compounds below.

MMA: methyl methacrylate
n-BMA: n-butyl methacrylate
KPS: potassium persulfate
"PELEX OT-P": product name, sodium dialkyl sulfosuccinate, made by Kao Corporation
i-BMA: i-butyl methacrylate
t-BMA: t-butyl methacrylate
MAA: methacrylic acid (made by Mitsubishi Rayon, Co., Ltd.)
2-HEMA: 2-ethylhexyl methacrylate (made by Mitsubishi Rayon)
AAEM: 2-acetoacetoxyethyl methacrylate (made by Eastman Chemical Company)
"OTG": product name, 2-ethylhexyl thioglycolate (made by Yodo Kagaku Co., Ltd.), "Emalgen 106": product name, polyoxyalkylene alkyl ether-based surfactant, HLB=10.5, made by Kao Corp.

<Measuring Average Particle Diameter>

The particle diameter of vinyl polymer particles was measured by observing at a magnification of 10000 times using a scanning electron microscope. Diameters of 100 randomly picked primary particles were measured and their average particle diameter was calculated by the following formula. Here, the average particle diameter means the volume mean diameter of primary particles.

[math 1]

$$Mv = \sum_{i=1}^{n} Di^4 \Bigg/ \sum_{i=1}^{n} Di^3$$

Mv: volume mean diameter of primary particles
Di: particle diameter of each individual particle
n: number of particles measured

<Measuring Temperature of Minimum Viscosity>

The temperature of minimum viscosity of vinyl polymer particles was measured as follows.
"jER828" (Made by Mitsubishi Chemical Corporation, epoxy equivalent weight: 189 g/eq) and vinyl polymer particles were mixed at a mass ratio of 1:1. The mixture was further kneaded by using a three roll mill to obtain a masterbatch. Into a glass flask, 20 parts by mass of masterbatch (containing 10 parts by mass each of jER 828 and vinyl polymer particles) and 90 parts by mass of jER 828 were weighed, and the mixture was stirred to be homogeneous. Next, 10 parts by mass of DY 9577 was weighed and added into the glass flask. Then, the content of the flask was stirred to obtain a homogeneous mixture, while heating the mixture to approximately 40°C in a water bath. After the mixture was defoamed in a vacuum ambient, a resin composition for testing was obtained.
The viscosity of the resin composition for testing was measured while its temperature was being raised. For the measurement results, the temperature at the minimum viscosity that appeared on the highest temperature side was set as the minimum viscosity temperature. Here, regarding the temperature of minimum viscosity, if it was 110°C or lower, it was evaluated as no delayed curing observed, and if it was 111°C or higher, it was evaluated as delayed curing observed.

device: AR-G2 (TA Instruments)
plate: 35 mmφ parallel plate
plate gap: 0.5 mm
frequency: 10 rad/sec
rate of temperature rise: 2°C/min
stress: 300 Pa

<Observing Cross Section of Cured Product>

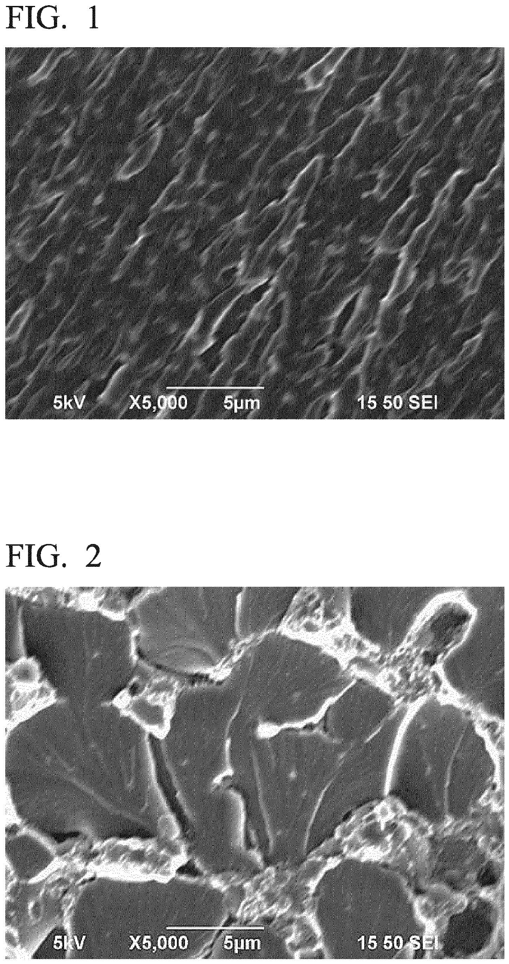

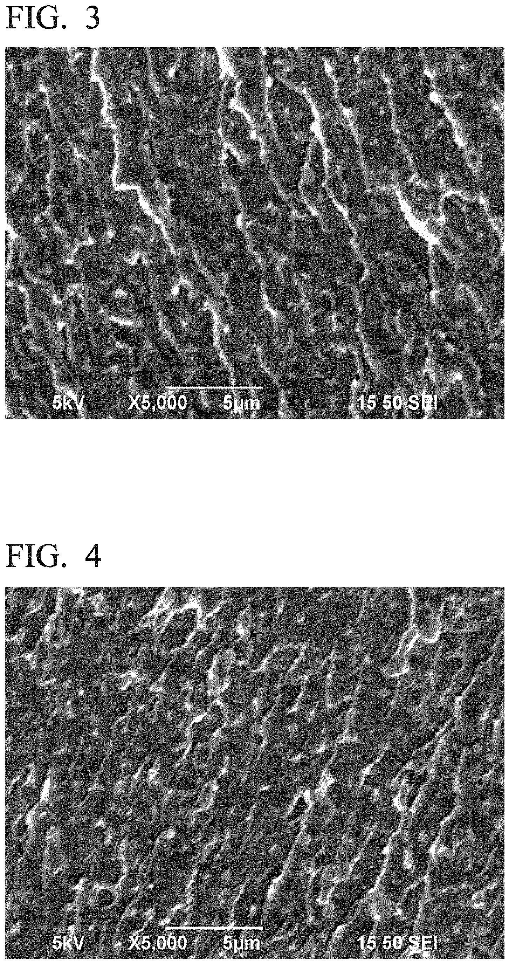

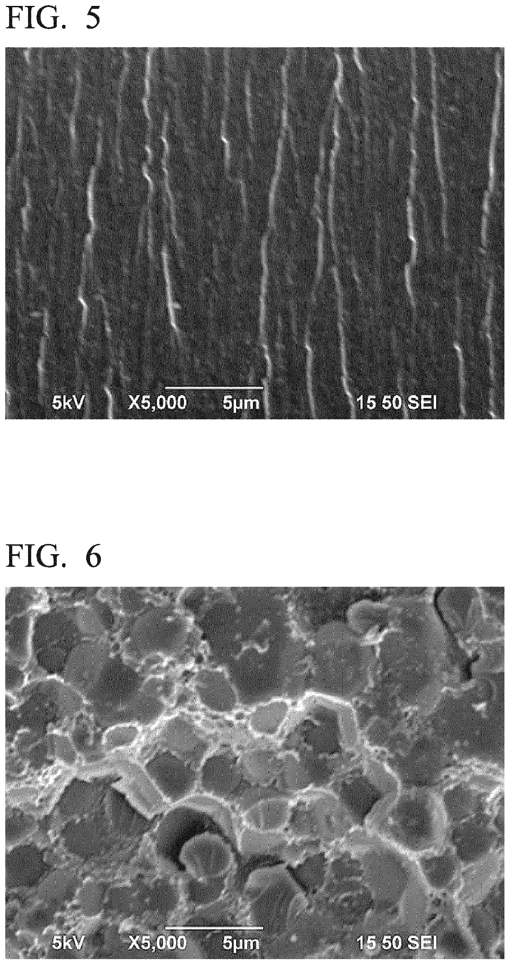

To determine whether vinyl polymer particles can be dissolved or swollen in the composition during a curing process, the following method was employed to observe if particles were present in the cross section of a cured product.
The above resin composition for testing was poured into a 3 mm-thick molding frame and was cured for 2 hours at 110°C. The 3 mm-thick cured resin plate was fractured the same as in measuring the fracture toughness value of cured resin in accordance with ASTM D5045, and the fractured surface was observed at a magnification of 1000 to 10000 times by using a scanning electron microscope to check if there were particles present in the viewfield. Observation images are shown in FIG. 1~FIG. 7. When it was confirmed there were no particle shapes in any image observed at a magnification of 1000 to 10000 times, vinyl polymer particles were determined to be capable of dissolving and swelling in the composition, whereas if particle shapes were observed in any image observed at a magnification of 1000 to 10000 times, the vinyl polymer particles were determined to be incapable of dissolving and swelling.

<Evaluation of Viscosity Increase Over Time>

The following method was employed to check if the viscosity of vinyl polymer particles increases over time.
The above resin composition for testing was stored for a week at a temperature of 25°C, and its viscosity was measured under conditions specified below. The viscosity was also measured shortly after the resin composition was prepared. The rate of viscosity increase was calculated as follows. If the rate was 1.5 times or lower, the storage stability was evaluated as excellent, whereas if the rate was 1.6 times or higher, the storage stability was evaluated as insufficient.

device: AR-G2 (made by TA Instruments)
plate: 35 mm$\varphi$ parallel plate
plate gap: 0.5 mm
frequency: 10 rad/sec
measurement temperature: 30°C
stress: 300 Pa

(rate of viscosity increase (times))=
(viscosity after being stored for a week at 25°C) / (viscosity shortly after preparation)

[Table3]

| Vinyl polymer particles | P1 | P2 | P3 | P4 | P5 | P6 |
|---|---|---|---|---|---|---|
| Average praticle diameter ($\mu$m) | 0.7 | 0.7 | 0.7 | 0.7 | 0.7 | 0.7 |
| Minimum viscosity temp (°C) | 109 | 106 | 109 | 109 | 110 | 104 |
| Delayed curing | none | none | none | none | none | none |
| Solubility/swelling capability | capable | capable | capable | capable | capable | capable |
| Rate of viscosity increase (times) | 1.0 | 1.0 | 1.0 | 1.0 | 1.0 | 1.0 |
| Storage stability | excellent | excellent | excellent | excellent | excellent | excellent |

<Example 1>

(Preparation of Matrix Resin Composition)

A matrix resin composition was prepared by using each component specified in Table 1 at ratios shown in Tables 5-1 and 5-2. In the following description, "part" means "part by mass" (same applies to all the examples hereinafter). Next, 75 parts of Kane Ace MX-257 and 10 parts of vinyl polymer particles (P1) were weighed into a container and stirred to make a mixture. The mixture was further finely stirred by using a three-roll mill to form a masterbatch. Into a glass flask, the masterbatch, 25 parts of Araldite CY 184, 10 parts of Accelerator DY 9577 and 0.3 parts of BYK-A 506 were weighed, and the mixture was stirred until it was homogeneous while the temperature was increased to be approximately 40°C by heating the mixture in a water bath. Accordingly, the matrix resin composition was obtained.

(Producing Tow Prepreg)

As for a reinforcing fiber bundle, a tow prepreg was prepared by using a carbon fiber "37-800WD" with a number of filaments of 30,000 (made by Mitsubishi Rayon Carbon Fiber & Composites, Inc., tensile strength: 5520 MPa, tensile modulus of elasticity: 255 GPa).
The method is described in detail below. A reinforcing fiber bundle was pulled out from a creel, and was passed through fiber opening bars heated at an approximate surface temperature of 110°C so that the bundle width was widened from 11 mm to 15 mm. The widened reinforcing fiber bundle was brought into contact with touch rolls heated at approximately 40°C and coated with the matrix resin composition so as to adhere the matrix resin composition to the fiber bundle. Next, the reinforcing fiber bundle with adhered matrix resin composition was passed through impregnation rolls heated at approximately 50°C so that the matrix resin composition was impregnated deep into the fiber bundle and wound on a paper tube by a winder so as to obtain a tow prepreg. Here, by adjusting the clearance between the doctor blade and touch roll, the amount of resin to be adhered to the reinforcing fiber bundle (namely, the resin content in the tow prepreg) was adjusted to be 24 mass%.

(Forming Pressure Vessel)

The tow prepreg was wound on a 9 mL-capacity aluminum liner (total length: 540 mm, body length 451 mm, outer diameter of the body: 163 mm, thickness at the center of the body: 3 mm) by using an FW machine. The aluminum liner used here was formed with a material made of aluminum and heat-treated in accordance with JIS H4040: A6061-T6.
The tow prepreg was unwound from the paper tube and was wound on a liner after its position was adjusted by the guide roll.
First, as the first layer in contact with the liner body, the tow prepreg was wound on the body at an angle of 88.6 degrees relative to the rotation axis of the liner. Next, to reinforce the head portion of the liner, a helical layer was laminated on the liner by winding the tow prepreg at an angle of 11.0 degrees relative to the rotation axis of the liner. Then, the tow prepreg was wound sequentially at the respective winding angles of "laminate Nos. 3~8" shown in Table 4. Accordingly, a pressure vessel intermediate was prepared.

[Table 4]

| Laminate No. | Winding angle (°) | Layer thickness (mm) |
|---|---|---|
| 1 | 88.6 | 2.0 |
| 2 | 11 | 0.6 |
| 3 | 11 | 0.6 |
| 4 | 65 | 0.6 |
| 5 | 13 | 0.6 |
| 6 | 13 | 0.6 |
| 7 | 88.6 | 0.7 |
| 8 | 11 | 0.6 |

The pressure vessel intermediate was taken out from the FW machine and was hung in a heating furnace. The internal furnace temperature was increased at a rate of 2°C/min to reach 110°C, and the pressure vessel was kept there for 2 hours at 110°C to cure the matrix resin composition. Then, the internal furnace temperature was reduced at a rate of 1°C/min to 60°C. Accordingly, a composite material pressure vessel was obtained.

<Testing Tank Burst Pressure>

The composite material pressure vessel was set in a hydraulic fracture testing machine and was then filled with water. Next, water pressure on the composite material pressure vessel was increased at a rate of 15 MPa/min. When the composite material pressure vessel was burst, the water pressure was recorded and set as the tank burst pressure of the pressure vessel. The results are shown in Tables 5-1 and 5-2.

(Tack Testing)

The tack of each tow prepreg prepared in examples and comparative examples was measured by the following tack test.

device: Tack Tester TA-500 (made by UBM)
area of plunger in contact with specimen
(tow prepreg as the measurement target): 3.1 cm$^2$
plunger pressing time: 10 sec.
plunger pressing load: 90,000 Pa
plunger lifting rate: 1 mm/sec.
measurement temperature: 23°C
measurement humidity: 50%RH

Procedures:

1) A tow prepreg is placed on the specimen stage and fixed thereto. The surface of the tow prepreg to be in contact with the plunger is set to be the one not seen when it was wound on the paper tube (namely, the surface on the paper tube side).

2) The plunger is pressed onto the tow prepreg for 10 seconds at a load of 90 kPa.

3) The plunger is lifted up at a rate of 1 mm/sec.

4) The value at the maximum stress during plunger lifting is set as the maximum stress value. The tack test was conducted five times and the average value of the five maximum stress values was set as the average maximum stress value. The results are shown in Tables 5-1 and 5-2.

<Observing Voids in Fiber-reinforced composite Material>

From the composite material pressure vessel, a portion corresponding to the fiber-reinforced composite material of laminate No. 1 in Table 4 was cut out and its cross section was observed. The cut-out portion corresponding to the fiber-reinforced composite material was polished by using REFINE-POLISHER APM-122 (made by Refine Tech Ltd.) prior to observation. To observe the cross section, industrial microscope ECLIPSE LV100ND (made by Nikon Corporation) was used. The results are shown in Table 8.

<Examples 2~6>

The same as in Example 1, matrix resin compositions were respectively prepared using materials at the ratios shown in Table 5-1 except that vinyl polymer particles (P2)~(P6) were used instead of vinyl polymer particles (P1) used in Example 1. Then, a tow prepreg was prepared, a composite pressure vessel was formed, and tank burst testing and tack testing were conducted for each example. The results are shown in Table 5-1.

<Example 7>

The same as in Example 1, a matrix resin composition was prepared using materials at the ratio shown in Table 5-1 except that the amount of vinyl polymer particles (P1) was changed to 20 parts. Then, a tow prepreg was prepared, a composite pressure vessel was formed, and tank burst testing and tack testing were conducted. The results are shown in Table 5-1.

<Example 8>

Into a glass flask, 50 parts of Kane Ace MX-257 and 25 parts of MA-DGIC were weighed and stirred until MA-DGIC was dissolved and homogeneously mixed while the mixture was heated in a water bath to approximately 80°C and was then cooled to room temperature. Into a container, 75 parts of the mixture and 10 parts of vinyl polymer particles (P1) were weighed, stirred and mixed. The mixture was further finely stirred by a three-roll mill to form a masterbatch. For the rest of the procedures, the same method was employed as in Example 1 so that a matrix resin composition and a tow prepreg were prepared, a composite pressure vessel was formed, and tank burst testing and tack testing were conducted. The results are shown in Table 5-1.

<Example 9>

A matrix resin composition was prepared, a tow prepreg was prepared, a composite pressure vessel was formed, and tank burst testing and tack testing were conducted the same as in Example 1 except that for forming the composite material pressure vessel, the internal furnace temperature was raised to 130°C at a rate of 2°C/min, and the pressure vessel was kept there for 1 hour at 130°C to cure the matrix resin composition. The results are shown in Table 5-2.

<Example 10>

The same as in Example 9, a matrix resin composition was prepared using materials at the ratio shown in Table 5-2 except that the amount of Accelerator DY9577 used in Example 9 was changed to 8 parts. Then, a tow prepreg was prepared, a composite pressure vessel was formed, and tank burst testing and tack testing were conducted. The results are shown in Table 5-2.

<Example 11>

The same as in Example 9, a matrix resin composition was prepared using materials at the ratio shown in Table 5-2 except that Accelerator DY9577 used in Example 9 was replaced with 6 parts of LEECURE B-550. Then, a tow prepreg was prepared, a composite pressure vessel was formed, and tank burst testing and tack testing were conducted. The results are shown in Table 5-2.

<Comparative Example 1>

The same as in Example 1, a matrix resin composition was prepared using materials at the ratio shown in Table 5-2 except that vinyl polymer particles (P-1) used in Example 1 were not contained in the matrix resin composition. Then, a tow prepreg was prepared, a composite pressure vessel was formed, and tank burst testing and tack testing were conducted. The results are shown in Table 5-2.

<Comparative Example 2>

The same as in Example 1, a matrix resin composition was prepared using materials at the ratio shown in Table 5-2 except that vinyl polymer particles (P-1) used in Example 1 were replaced with 5 parts of ORGASOL 2001UD NAT1. Then, a tow prepreg was prepared, a composite pressure vessel was formed, and tank burst testing and tack testing were conducted. The results are shown in Table 5-2.

<Comparative Example 3>

The same as in Example 1, a matrix resin composition was prepared using materials at the ratio shown in Table 5-2 except that vinyl polymer particles (P-1) used in Example 1 were replaced with 10 parts of ORGASOL 2001UD NAT1. Then, a tow prepreg was prepared, a composite pressure vessel was formed, and tank burst testing and tack testing were conducted. The results are shown in Table 5-2.

[Table 5-1]

| Component | Product name | Example 1 | Example 2 | Example 3 | Example 4 | Example 5 | Example 6 | Example 7 | Example 8 |
|---|---|---|---|---|---|---|---|---|---|
| Component (A) & optional component | Kane Ace MX-257 | 75 | 75 | 75 | 75 | 75 | 75 | 75 | 75 |
| | | component (A): 47 | component (A): 47 | com ponent (A): 47 | component (A): 47 | component (A): 47 | component (A): 47 | component (A): 47 | component (A): 47 |
| | | optional component 28 | optional component: 28 | optional component: 28 | optional component 28 | optional com ponent: 28 | optional component: 28 | optional component: 28 | optional com ponent: 28 |
| Component (A) | Araldite CY184 | 25 | 25 | 25 | 25 | 25 | 25 | 25 | |
| | MA-DGIC | | | | | | | | 25 |
| Component (B) | Accelerator DY 9577 | 10 | 10 | 10 | 10 | 10 | 10 | 10 | |
| | LEECURE B-550 | | | | | | | | |

| Component | Product name | Example 1 | Example 2 | Example 3 | Example 4 | Example 5 | Example 6 | Example 7 | Example 8 |
|---|---|---|---|---|---|---|---|---|---|
| Component (C) | vinyl polymer particles P1 | 10 | | | | | | 20 | 10 |
| | vinyl polymer particles P2 | | 10 | | | | | | |
| | vinyl polymer particles P3 | | | 10 | | | | | |
| | vinyl polymer particles P4 | | | | 10 | | | | |
| | vinyl polymer particles P5 | | | | | 10 | | | |
| | vinyl polymer particles P6 | | | | | | 10 | | |
| Other component | ORGASOL 2001 UD NAT1 | | | | | | | | |
| | BYK-A 506 | 0.3 | 0.3 | 0.3 | 0.3 | 0.3 | 0.3 | 0.3 | 0.3 |
| Content of resin in tow prepreg (mass%) | | 24 | | | | | | | |
| Curing conditions | | 110°C×2hr | | | | | | | |
| Tack (average max stress value) (kPa) | | 28 | 34 | 32 | 21 | 39 | 33 | 23 | 44 |
| Tank burst pressure (MPa) | | 124 | 118 | 121 | 112 | 119 | 117 | 110 | 120 |

[Table 5-2]

| Component | Product name | Example 9 | Example 10 | Example 11 | Comp. Example 1 | Comp. Example 2 | Comp. Example 3 |
|---|---|---|---|---|---|---|---|
| Component (A) & optional component | Kane Ace MX-257 | 75 | 75 | 75 | 75 | 75 | 75 |
| | | component (A): 47 | component (A): 47 | component (A): 47 | component (A): 47 | component (A): 47 | component (A): 47 |
| | | optional component: 28 | optional component: 28 | optional component: 28 | optional component: 28 | optional component 28 | optional component: 28 |
| Component (A) | Araldite CY184 | 25 | 25 | 25 | 25 | 25 | 25 |
| | MA-DGIC | | | | | | |
| Component (B) | Accelerator DY 9577 | 10 | 8 | | 10 | 10 | 10 |
| | LEECURE B-550 | | | 6 | | | |
| Component (C) | vinyl polymer particles P1 | | | | | | |
| | vinyl polymer particles P2 | 10 | 10 | 10 | | | |
| | vinyl polymer particles P3 | | | | | | |
| | vinyl polymer particles P4 | | | | | | |
| | vinyl polymer particles P5 | | | | | | |
| | vinyl polymer particles P6 | | | | | | |
| Other component | ORGASOL 2001 UD NAT1 | | | | | 5 | 10 |
| | BYK-A 506 | 0.3 | 0.3 | 0.3 | 0.3 | 0.3 | 0.3 |
| Content of resin in tow prepreg (mass%) | | 24 | | | | | |

(continued)

| Component | Product name | Example 9 | Example 10 | Example 11 | Comp. Example 1 | Comp. Example 2 | Comp. Example 3 |
|---|---|---|---|---|---|---|---|
| Curing conditions | | | 130°C×1hr | | | 110°C×2hr | |
| Tack (average max stress value) (kPa) | | 34 | 23 | 38 | 91 | 33 | 14 |
| Tank burst pressure (MPa) | | 118 | 114 | 114 | 123 | 109 | 104 |

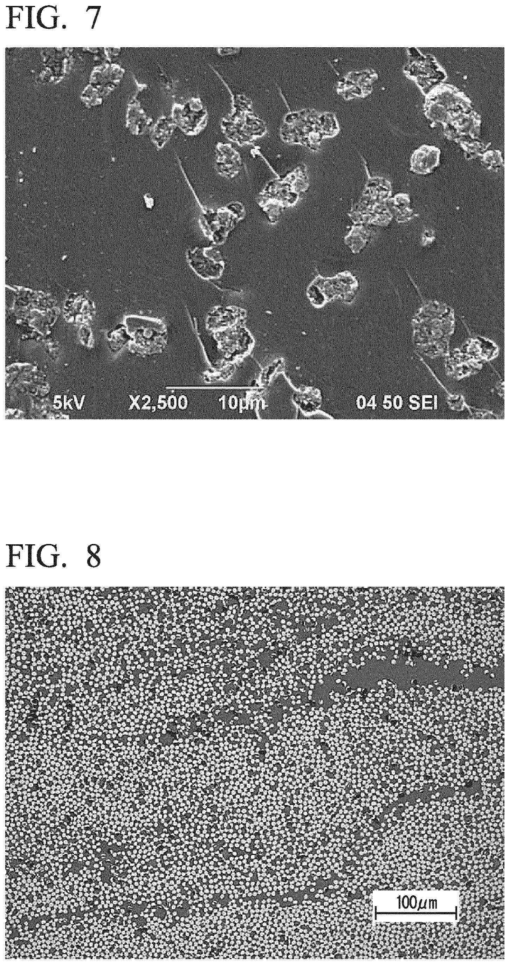

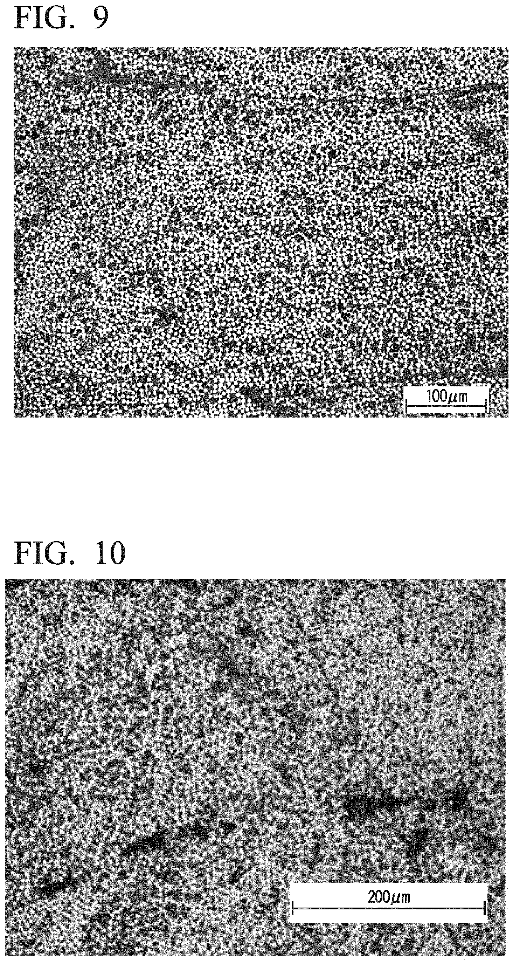

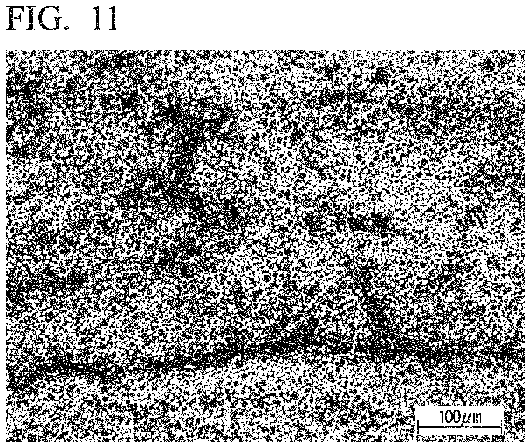

In each of Examples 1~11, the tack is found to be in an appropriate range based on the average maximum stress value, and the tank burst pressure is found to be high, as is clearly shown in Tables 5-1 and 5-2. Also, since fewer voids are found in the composite material pressure vessel as shown in FIGs. 8 and 9, fatigue strength is thought to be high. By contrast, as is clear in the results of Comparative Example 1, when component (C): pre-gelatinizing agent is added, a high tank burst pressure is obtained but the tack is high, and properties such as unwinding performance, processability and shape retention capability of the tow prepreg are low. Furthermore, as is clear in the results of Comparative Examples 2 and 3, if fine particles of polyamide 12 -- ORGASOL 2001UD NAT1-- are used instead of component (C): pre-gelatinizing agent, the tack is within an appropriate range, but the tank burst pressure is low. In addition, FIGs. 10 and 11 show that fewer voids are observed in the composite material pressure vessel, and the fatigue strength is thus thought to be high.

INDUSTRIAL APPLICABILITY

Because of a pre-gelatinizing agent, which exists as particles in a matrix resin composition at normal temperature but is dissolved in the matrix resin composition, more specifically, in the component (A): epoxy resin, or swollen by the epoxy resin at a higher temperature, the tow prepreg of the present invention exhibits excellent unwinding performance from the spool, excellent processability and shape retention capability during the FW step. Also, when manufactured by using the tow prepreg, the pressure vessel exhibits excellent anti-burst strength to resist high tank pressure while also exhibiting high fatigue strength.

**Claims**

1. A tow prepreg, made by impregnating a reinforcing fiber bundle with a matrix resin composition that comprises

   component (A): epoxy resin,
   component (B): epoxy resin curing agent, and
   component (C'): pre-gelatinizing agent which is vinyl polymer particles with an average particle diameter of 2.0 $\mu$m or less obtained by emulsion or suspension polymerization, the pre-gelatinizing agent having a temperature of minimum viscosity of 110°C or lower,

   wherein, the temperature of minimum viscosity is determined to be the temperature obtained at the minimum viscosity that appears on the highest temperature side when a sample is prepared by adding and dispersing homogeneously 10 parts by mass of the component (C') to 100 parts by mass of bisphenol-A epoxy resin with an epoxy equivalent weight of 190 $\pm$6 g/eq, and by dissolving 10 parts by mass of a boron trichloride-octylamine complex into the mixture, and when the viscosity of the sample is measured by increasing the temperature at a rate of 2°C/min.

2. The tow prepreg according to Claim 1, wherein the component (C') consists of core-shell particles.

3. The tow prepreg according to Claim 2, wherein the core-shell particles are structured to have a core layer, which is a polymer made by polymerizing (meth)acrylate, and a shell layer, which is a polymer made by polymerizing at least one selected from among (meth)acrylate, a functional group-containing (meth)acrylate and a carboxyl group-containing vinyl monomer.

4. The tow prepreg according to any of Claims 1~3, wherein the original particle shape is not observed in any magnification when the component (C') is treated as follows:
   Observation method: a sample, which is prepared by adding and dispersing homogeneously 10 parts by mass of the component (C') to 100 parts by mass of bisphenol-A epoxy resin with an epoxy equivalent weight of 190 $\pm$6 g/eq, and by dissolving 10 parts by mass of a boron trichloride-amine complex into the mixture, is poured into a 3 mm-thick molding frame and cured for 2 hours at 110°C; the 3 mm-thick cured resin plate is fractured the same as in measuring the fracture toughness value of a cured resin in accordance with ASTM D5045; and the fractured surface of the cured resin piece is observed at a magnification of 1000~10000 times by using a scanning electron microscope.

5. The tow prepreg according to any of Claims 1~4, wherein the component (B) is a boron trihalide-amine complex.

6. The tow prepreg according to any of Claims 1~5, wherein the component (B) is a boron trichloride-amine complex.

7. The tow prepreg according to any of Claims 1~6, wherein the viscosity of the matrix resin composition at 30°C is set at 5 Pa·s to 300 Pa·s.

8. The tow prepreg according to any of Claims 1~7, wherein relative to 100 parts by mass of the matrix resin composition, the content of the component (A) is set at 40 to 96.5 parts by mass, the content of the component (B) is set at 0.5 to 50 parts by mass, and the content of the component (C') is set at 3 to 20 parts by mass.

9. The tow prepreg according to any of Claims 1~8, wherein the reinforcing fiber bundle is a carbon fiber bundle.

10. A composite material pressure vessel, manufactured by using a tow prepreg according to any of Claims 1~9.

11. The composite material pressure vessel according to Claim 10, wherein the composite material pressure vessel is manufactured by winding the tow prepreg on a liner.

12. A method for manufacturing a composite material pressure vessel, comprising:

an impregnation step for preparing a resin-impregnated reinforcing fiber bundle by impregnating a reinforcing fiber bundle with a matrix resin composition that comprises components (A), (B) and (C') below;
a winding step for forming a tow prepreg by winding the resin-impregnated reinforcing fiber bundle on a bobbin such as a paper tube;
an unwinding step for pulling out the tow prepreg from the bobbin;
a filament-winding step for obtaining a pressure vessel intermediate by winding the unwound tow prepreg on a liner; and
a curing step for curing the matrix resin composition of the resin-impregnated reinforcing fiber bundle by applying heat on the pressure vessel intermediate;

Component (A): epoxy resin
Component (B): epoxy resin curing agent
Component (C'): pre-gelatinizing agent which is vinyl polymer particles with an average particle diameter of 2.0 $\mu$m or less obtained by emulsion or suspension polymerization, the pre-gelatinizing agent having a temperature of minimum viscosity of 110°C or lower,

wherein, the temperature of minimum viscosity is determined to be the temperature obtained at the minimum viscosity that appears on the highest temperature side when a sample is prepared by adding and dispersing homogeneously 10 parts by mass of the component (C') to 100 parts by mass of bisphenol-A epoxy resin with an epoxy equivalent weight of 190 $\pm$6 g/eq, and by dissolving 10 parts by mass of a boron trichloride-octylamine complex into the mixture, and when the viscosity of the sample is measured by increasing the temperature at a rate of 2°C/min

13. A method for manufacturing a composite material pressure vessel, comprising:

an impregnation step for forming a resin-impregnated reinforcing fiber bundle by impregnating a reinforcing fiber bundle with a matrix resin composition that comprises components (A), (B) and (C') below;
a filament-winding step for obtaining a pressure vessel intermediate by winding the resin-impregnated reinforcing fiber bundle on a liner; and
a curing step for curing the matrix resin composition contained in the resin-impregnated reinforcing fiber bundle by applying heat on the pressure vessel intermediate,

Component (A): epoxy resin
Component (B): epoxy resin curing agent
Component (C'): pre-gelatinizing agent which is vinyl polymer particles with an average particle diameter of 2.0 $\mu$m or less obtained by emulsion or suspension polymerization, the pre-gelatinizing agent having a temperature of minimum viscosity of 110°C or lower,

wherein, the temperature of minimum viscosity is determined to be the temperature obtained at the minimum viscosity that appears on the highest temperature side when a sample is prepared by adding and dispersing homogeneously 10 parts by mass of the component (C') to 100 parts by mass of bisphenol-A epoxy resin with an epoxy equivalent weight of 190 $\pm$6 g/eq, and by dissolving 10 parts by mass of a boron trichloride-octylamine complex into the mixture, and when the viscosity of the sample is measured by increasing the temperature at a rate of 2°C/min.

**Patentansprüche**

1. Tow-Prepreg, hergestellt durch Imprägnieren eines Verstärkungsfaserbündels mit einer Matrixharzzusammensetzung, die folgendes umfasst:

   Komponente (A): Epoxidharz
   Komponente (B): Epoxidharz-Härtungsmittel und
   Komponente (C'): Vorgelatinierungsmittel, bei dem es sich um Vinylpolymerteilchen mit einem mittleren Teilchendurchmesser von 2,0 $\mu$m oder weniger handelt, die durch Emulsions- oder Suspensionspolymerisation erhalten werden, wobei das Vorgelatinierungsmittel eine Temperatur mit minimaler Viskosität von 110°C oder niedriger aufweist,

   wobei die Temperatur mit minimaler Viskosität als die Temperatur bestimmt ist, bei der die Viskosität, die bei den höchsten Temperaturen auftritt, minimal ist, wenn eine Probe hergestellt wird, indem 10 Massenteile der Komponente (C') zu 100 Masseteilen eines Bisphenol-A-Epoxidharzes mit einem Epoxidäquivalentgewicht von 190±6 g/Äq gegeben und homogen dispergiert werden und 10 Massenteile eines Bortrichlorid-Octylaminkomplexes in der Mischung aufgelöst werden, und wenn die Viskosität der Probe gemessen wird, während die Temperatur mit einer Rate von 2°C/min erhöht wird.

2. Tow-Prepreg gemäß Anspruch 1, wobei die Komponente (C') aus Kern-Schale-Teilchen besteht.

3. Tow-Prepreg gemäß Anspruch 2, wobei die Kern-Schale-Teilchen so strukturiert sind, dass sie eine Kernschicht aufweisen, bei der es sich um ein Polymer handelt, das durch Polymerisieren von (Meth)acrylat hergestellt ist, und eine Schalenschicht aufweisen, bei der es sich ein Polymer handelt, das durch Polymerisieren von mindestens einem, das aus (Meth)acrylat, einem (Meth)acrylat mit funktionellen Gruppen und einem Vinylmonomer mit Carboxylgruppen ausgewählt ist, hergestellt ist.

4. Tow Prepreg gemäß einem der Ansprüche 1 bis 3, wobei die ursprüngliche Teilchenform bei keiner Vergrößerung beobachtet wird, wenn die Komponente (C') wie folgt behandelt wird:
   Beobachtungsverfahren: Eine Probe, die hergestellt wird, indem 10 Massenteile der Komponente (C') zu 100 Massenteilen Bisphenol-A-Epoxidharz mit einem Epoxidäquivalentgewicht von 190±6 g/Äq gegeben und homogen dispergiert werden und 10 Massenteile eines Bortrichlorid-Aminkomplexes in der Mischung aufgelöst werden, wird in einen 3 mm dicken Formrahmen gegossen und 2 Stunden bei 110°C gehärtet; die 3 mm dicke gehärtete Harzplatte wird genauso zerteilt wie bei der Messung des Bruchzähigkeitswertes von ausgehärtetem Harz gemäß ASTM D5045; und die zerteilte Oberfläche des gehärteten Harzstücks wird bei einer 1000-10000-fachen Vergrößerung unter Verwendung eines Rasterelektronenmikroskops beobachtet.

5. Tow-Prepreg gemäß einem der Ansprüche 1-4, wobei die Komponente (B) ein Bortrihalogenid-Amin-Komplex ist.

6. Tow-Prepreg gemäß einem der Ansprüche 1-5, wobei die Komponente (B) ein Bortrichlorid-Amin-Komplex ist.

7. Tow-Prepreg gemäß einem der Ansprüche 1-6, wobei die Viskosität der Matrixharzzusammensetzung bei 30°C auf 5 Pa·s bis 300 Pa·s eingestellt ist.

8. Tow-Prepreg gemäß einem der Ansprüche 1-7, wobei, in Bezug auf 100 Massenteile der Matrixharzzusammensetzung, der Gehalt der Komponente (A) auf 40 bis 96,5 Massenteile eingestellt ist, der Gehalt der Komponente (B) auf 0,5 bis 50 Massenteile eingestellt ist und der Gehalt der Komponente (C') auf 3 bis 20 Massenteile eingestellt ist.

9. Tow-Prepreg gemäß einem der Ansprüche 1-8, wobei das Verstärkungsfaserbündel ein Kohlenstofffaserbündel ist.

10. Druckbehälter aus Verbundmaterial, hergestellt unter Verwendung eines Tow-Prepregs gemäß einem der Ansprüche 1-9.

11. Druckbehälter aus Verbundmaterial gemäß Anspruch 10, wobei der Druckbehälter aus Verbundmaterial durch Wickeln des Tow-Prepregs um eine Auskleidung hergestellt wird.

**12.** Verfahren zur Herstellung eines Druckbehälters aus Verbundmaterial, umfassend:

einen Imprägnierungsschritt, bei dem ein mit Harz imprägniertes Verstärkungsfaserbündel gebildet wird, indem ein Verstärkungsfaserbündel mit einer Matrixharzzusammensetzung, die die folgenden Komponenten (A), (B) und (C') umfasst, imprägniert wird;

einen Wickelschritt, bei dem ein Tow-Prepreg gebildet wird, indem das mit Harz imprägnierte Verstärkungsfaserbündel auf eine Rolle, beispielsweise eine Papierröhre, gewickelt wird;

einen Abwickelschritt, bei dem das Tow-Prepreg von der Rolle abgewickelt wird;

einen Faser-Wickelschritt, bei dem eine Zwischenstufe des Druckbehälters erhalten wird, indem das abgewickelte Tow-Prepreg auf eine Auskleidung gewickelt wird; und

einen Härtungsschritt, bei dem die Matrixharzzusammensetzung des mit Harz imprägnierten Verstärkungsfaserbündels gehärtet wird, indem die Zwischenstufe des Druckbehälters erwärmt wird;

Komponente (A): Epoxidharz

Komponente (B): Epoxidharzhärter

Komponente (C'): Vorgelatinierungsmittel, bei dem es sich um Vinylpolymerteilchen mit einem mittleren Teilchendurchmesser von 2,0 $\mu$m oder weniger handelt, die durch Emulsions- oder Suspensionspolymerisation erhalten werden, wobei das Vorgelatinierungsmittel eine Temperatur mit minimaler Viskosität von 110°C oder niedriger aufweist,

wobei die Temperatur mit minimaler Viskosität als die Temperatur bestimmt ist, bei der die Viskosität, die bei den höchsten Temperaturen auftritt, minimal ist, wenn eine Probe hergestellt wird, indem 10 Massenteile der Komponente (C') zu 100 Masseteilen eines Bisphenol-A-Epoxidharzes mit einem Epoxidäquivalentgewicht von 190±6 g/Äq gegeben und homogen dispergiert werden und 10 Massenteile eines Bortrichlorid-Octylaminkomplexes in der Mischung aufgelöst werden, und wenn die Viskosität der Probe gemessen wird, während die Temperatur mit einer Rate von 2°C/min erhöht wird.

**13.** Verfahren zur Herstellung eines Druckbehälters aus Verbundmaterial, umfassend:

einen Imprägnierungsschritt, bei dem ein mit Harz imprägnierten Verstärkungsfaserbündels gebildet wird, indem ein Verstärkungsfaserbündel mit einer Matrixharzzusammensetzung, die die folgenden Komponenten (A), (B) und (C') umfasst, imprägniert wird;

einen Faser-Wickelschritt, bei dem eine Zwischenstufe des Druckbehälters erhalten wird, indem das mit Harz imprägnierte Verstärkungsfaserbündel auf eine Auskleidung gewickelt wird; und

einen Härtungsschritt, bei dem die Matrixharzzusammensetzung, die im mit Harz imprägnierten Verstärkungsfaserbündel enthalten ist, gehärtet wird, indem die Zwischenstufe des Druckbehälters erwärmt wird;

Komponente (A): Epoxidharz

Komponente (B): Epoxidharzhärter

Komponente (C'): Vorgelatinierungsmittel, bei dem es sich um Vinylpolymerteilchen mit einem mittleren Teilchendurchmesser von 2,0 $\mu$m oder weniger handelt, die durch Emulsions- oder Suspensionspolymerisation erhalten werden, wobei das Vorgelatinierungsmittel eine Temperatur mit minimaler Viskosität von 110°C oder niedriger aufweist,

wobei die Temperatur mit minimaler Viskosität als die Temperatur bestimmt ist, bei der die Viskosität, die bei den höchsten Temperaturen auftritt, minimal ist, wenn eine Probe hergestellt wird, indem 10 Massenteile der Komponente (C') zu 100 Masseteilen eines Bisphenol-A-Epoxidharzes mit einem Epoxidäquivalentgewicht von 190±6 g/Äq gegeben und homogen dispergiert werden und 10 Massenteile eines Bortrichlorid-Octylaminkomplexes in der Mischung aufgelöst werden, und wenn die Viskosität der Probe gemessen wird, während die Temperatur mit einer Rate von 2°C/min erhöht wird.

**Revendications**

**1.** Câble préimprégné, fabriqué en imprégnant un faisceau de fibres de renforcement avec une composition de résine de matrice comprenant

constituant (A) : une résine époxy,

constituant (B) : un agent de durcissement de résine époxy, et

constituant (C') : un agent de pré-gélatinisation qui est constitué de particules de polymère vinylique ayant un diamètre de particule moyen de 2,0 μm ou moins, obtenu par polymérisation en émulsion ou en suspension, l'agent de pré-gélatinisation ayant une température de viscosité minimum égale ou inférieure à 110 °C,

dans lequel la température de viscosité minimum est déterminée comme étant la température obtenue à la viscosité minimum qui apparaît du côté de la température la plus élevée lorsqu'un échantillon est préparé en ajoutant, et en dispersant de manière homogène, 10 parties en masse du constituant (C') à 100 parties en masse de résine époxy de bisphénol-A avec un poids équivalent d'époxy de 190 ± 6 g/éq, et en dissolvant 10 parties en masse d'un complexe de trichlorure de bore et d'octylamine dans le mélange, et lorsque la viscosité de l'échantillon est mesurée en augmentant la température à une vitesse de 2 °C/min.

2. Câble préimprégné selon la revendication 1, dans lequel le constituant (C') est constitué de particules à noyau et enveloppe.

3. Câble préimprégné selon la revendication 2, dans lequel les particules à noyau et enveloppe sont structurées de manière à avoir une couche de noyau, qui est un polymère fabriqué par polymérisation de (méth)acrylate, et une couche d'enveloppe, qui est un polymère fabriqué par polymérisation d'au moins un choisi parmi du (méth)acrylate, du (méth)acrylate contenant un groupe fonctionnel et un monomère vinylique contenant un groupe carboxyle.

4. Câble préimprégné selon l'une quelconque des revendications 1 à 3, dans lequel la forme de particule d'origine n'est pas observée sous un quelconque grossissement lorsque le constituant (C') est traité comme suit :
Méthode d'observation : un échantillon, qui est préparé en ajoutant, et en dispersant de manière homogène, 10 parties en masse du constituant (C') à 100 parties en masse de résine époxy de bisphénol-A avec un poids équivalent d'époxy de 190 ± 6 g/éq, et en dissolvant dans le mélange 10 parties en masse d'un complexe de trichlorure de bore et d'amine, est versé dans un cadre de moulage de 3 mm d'épaisseur et durci pendant 2 heures à 110 °C ; la plaque de résine durcie de 3 mm d'épaisseur est fracturée de la même manière que pour mesurer la valeur de résistance à la fracture d'une résine durcie conformément à la norme ASTM D5045 ; et la surface fracturée de la pièce de résine durcie est observée à un grossissement de 1000 à 10000 fois en utilisant un microscope électronique à balayage.

5. Câble préimprégné selon l'une quelconque des revendications 1 à 4, dans lequel le constituant (B) est un complexe de trihalogénure de bore et d'amine.

6. Câble préimprégné selon l'une quelconque des revendications 1 à 5, dans lequel le constituant (B) est un complexe de trichlorure de bore et d'amine.

7. Câble préimprégné selon l'une quelconque des revendications 1 à 6, dans lequel la viscosité de la composition de résine de matrice à 30 °C est réglée entre 5 Pa.s et 300 Pa.s.

8. Câble préimprégné selon l'une quelconque des revendications 1 à 7, dans lequel, par rapport à 100 parties en masse de la composition de résine de matrice, la teneur en constituant (A) est réglée entre 40 et 96,5 parties en masse, la teneur en constituant (B) est réglée entre 0,5 et 50 parties en masse, et la teneur en constituant (C') est réglée entre 3 et 20 parties en masse.

9. Câble préimprégné selon l'une quelconque des revendications 1 à 8, dans lequel le faisceau de fibres de renforcement est un faisceau de fibres de carbone.

10. Récipient composite sous pression, fabriqué en utilisant un câble préimprégné selon l'une quelconque des revendications 1 à 9.

11. Récipient composite sous pression selon la revendication 10, dans lequel le récipient composite sous pression est fabriqué en enroulant le câble préimprégné sur une doublure.

12. Procédé de fabrication d'un récipient composite sous pression, comprenant :

une étape d'imprégnation pour préparer un faisceau de fibres de renforcement imprégné de résine en imprégnant un faisceau de fibres de renforcement avec une composition de résine de matrice comprenant les constituants (A), (B) et (C') ci-dessous ;

une étape d'enroulement pour former un câble préimprégné en enroulant le faisceau de fibres de renforcement imprégné de résine sur une bobine, comme un tube en papier ;

une étape de déroulement pour enlever le câble préimprégné de la bobine ;

une étape d'enroulement de filament pour obtenir un récipient sous pression intermédiaire en enroulant le câble préimprégné déroulé sur une doublure ; et

une étape de durcissement pour durcir la composition de résine de matrice du faisceau de fibres de renforcement imprégné de résine en appliquant de la chaleur sur l'intermédiaire de récipient sous pression ;

Constituant (A) : une résine époxy

Constituant (B) : un agent de durcissement de résine époxy

Constituant (C') : un agent de pré-gélatinisation qui est des particules de polymère vinylique avec un diamètre de particule moyen égal ou inférieur à 2,0 μm obtenu par polymérisation en émulsion ou en suspension, l'agent de pré-gélatinisation ayant une température de viscosité minimum égale ou inférieure à 110 °C,

dans lequel la température de viscosité minimum est déterminée comme étant la température obtenue à la viscosité minimum qui apparaît du côté de la température la plus élevée lorsqu'un échantillon est préparé en ajoutant, et en dispersant de manière homogène, 10 parties en masse du constituant (C') à 100 parties en masse de résine époxy de bisphénol-A avec un poids équivalent d'époxy de 190 ± 6 g/éq, et en dissolvant 10 parties en masse d'un complexe de trichlorure de bore et d'octylamine dans le mélange, et lorsque la viscosité de l'échantillon est mesurée en augmentant la température à une vitesse de 2 °C/min.

**13.** Procédé de fabrication d'un récipient composite sous pression, comprenant :

une étape d'imprégnation pour former un faisceau de fibres de renforcement imprégné de résine en imprégnant un faisceau de fibres de renforcement avec une composition de résine de matrice comprenant les constituants (A), (B) et (C') ci-dessous ;

une étape d'enroulement de filament pour obtenir un intermédiaire de récipient sous pression en enroulant le faisceau de fibres de renforcement imprégné de résine sur une doublure ; et

une étape de durcissement pour durcir la composition de résine de matrice contenue dans le faisceau de fibres de renforcement imprégné de résine en appliquant de la chaleur sur l'intermédiaire de récipient sous pression,

Constituant (A) : une résine époxy

Constituant (B) : un agent de durcissement de résine époxy

Constituant (C') : un agent de pré-gélatinisation qui est constitué de particules de polymère vinylique ayant un diamètre de particule moyen de 2,0 μm ou moins obtenu par polymérisation en émulsion ou en suspension, l'agent de pré-gélatinisation ayant une température de viscosité minimum égale ou inférieure à 110 °C,

dans lequel la température de viscosité minimum est déterminée comme étant la température obtenue à la viscosité minimum qui apparaît du côté de la température la plus élevée lorsqu'un échantillon est préparé en ajoutant, et en dispersant de manière homogène, 10 parties en masse du constituant (C') à 100 parties en masse de résine époxy de bisphénol-A avec un poids équivalent d'époxy de 190 ± 6 g/éq, et en dissolvant 10 parties en masse d'un complexe de trichlorure de bore et d'octylamine dans le mélange, et lorsque la viscosité de l'échantillon est mesurée en augmentant la température à une vitesse de 2 °C/min.

FIG. 1

FIG. 2

FIG. 3

FIG. 4

## FIG. 5

## FIG. 6

FIG. 7

FIG. 8

FIG. 9

100μm

FIG. 10

200μm

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09087365 A
- JP S55015870 A
- WO 2010090246 A
- JP H09176346 A
- JP 2005335296 A
- JP 2006063173 A
- JP H08073630 A
- JP H09031219 A
- JP H0873630 A